# EUROPÄISCHE PATENTSCHRIFT

(11) **EP 1 522 754 B1**
(45) Veröffentlichungstag und Bekanntmachung des Hinweises auf die Patenterteilung: **20.12.2006**
(21) Anmeldenummer: 04024024.4
(22) Anmeldetag: 08.10.2004
(51) Int. Cl.: F16D 48/06

(54) **Druckmedium-Notversorgung für ein Kupplungssystem und ein die Druckmedium-Notversorgung aufweisender Kraftfahrzeug-Antriebsstrang**
Emergency fluid pressure supply for a clutch system and vehicle drive line equipped with this emergency fluid pressure supply.
Alimentation en fluide sous pression pour système d'embrayage et train de propulsion pour vehicules avec cette alimentation en fluide sous pression.

(30) Priorität: 10.10.2003 DE 10347073
(43) Veröffentlichungstag der Anmeldung: 13.04.2005
(73) Patentinhaber: ZF FRIEDRICHSHAFEN AG, 88046 Friedrichshafen (DE)
(72) Erfinder: Tögel, Matthias, 97711 Massbach (DE); Steiner, Eduard, 97072 Würzburg (DE); Kraus, Paul, 97464 Niederwerm (DE)

(56) Entgegenhaltungen:
- DE-A- 10 150 598
- DE-A- 19 856 297

## Beschreibung

Die Erfindung betrifft nach einem Aspekt einen Kraftfahrzeug-Antriebsstrang, umfassend eine Antriebseinheit, ein Getriebe und ein Kupplungssystem mit einer zwischen der Antriebseinheit und dem Getriebe angeordneten Kupplungseinrichtung zur Momentenübertragung zwischen der Antriebseinheit und dem Getriebe, wobei die Kupplungseinrichtung wenigstens eine unter Vermittlung von Druckmedium betätigbare Kupplungsanordnung aufweist, wobei über ein Druckmediumsystem auf Grundlage einer zumindest der Kupplungseinrichtung zugeordneten Pumpenanordnung das Druckmedium für die Betätigung der Kupplungsanordnung bereitstellbar ist unter Vermittlung wenigstens eines das Druckmedium auf einem Betätigungsdruck bereitstellenden, elektrisch ansteuerbaren Druck-Steuer/Regelventils des Druckmediumsystems.

Es sind bereits Hydrauliknotsteuerungen bekannt (z.Bsp. DE 198 56 297 A1), welche für eine zwischen einem Verbrennungsmotor und einem Getriebe angeordnete hydraulisch betätigte Kupplung eine Notsteuerung der Kupplung ermöglichen.
Hierbei dient eine von einem Verbrennungsmotor angetriebenen Pumpe zur Speisung einer Arbeitsleitung, in der eine Drosselstelle angeordnet ist und wobei ein Regelventil zur Steuerung der Kupplung bei einem Ausfall der elektrischen Versorgung der elektrohydraulischen Kupplungssteuerung dient. Das Regelventil ist hierbei so ausgestaltet, dass ein Anstieg des Drucks an der Kupplung in Abhängigkeit vom Anstieg der Motordrehzahl regelbar ist. Hierdurch wird ein variables Schließen der Kupplung in Abängigkeit der Motordrehzahl ermöglicht.

Aus der DE 10150 598 A1 ist ein Kupplungssystem bekannt, wobei die Kupplungseinrichtung wenigstens eine unter Vermittlung von Druckmedium betätigbare, für einen Betrieb unter Einwirkung eines Betriebsmediums vorgesehene Kupplungsanordnung aufweist, wobei die Kupplungseinrichtung eine elektromotorisch antreibbare erste Pumpenanordnung aufweist, welche zur Bereitstellung des Druckmediums für die Betätigung dient, und eine elektromotorisch antreibbare zweite Pumpenanordnung aufweist, welche zur Bereitstellung des Betriebsmediums dient. Für eine Notbetätigung der Kupplungseinrichtung ist hierbei vorgesehen, dass die Kühlölpumpe in den Druckölkreis geschaltet werden kann um eine Notbetätigung mittels Kühlöldruck zu realisieren.

Beispielsweise aus der DE 100 56 954 A1 und der DE 101 02 874 A1 ist ein Kraftfahrzeug-Antriebsstrang bekannt, umfassend eine Antriebseinheit, ein Getriebe und ein Kupplungssystem mit einer zwischen der Antriebseinheit und dem Getriebe angeordneten Kupplungseinrichtung zur Momentenübertragung zwischen der Antriebseinheit und dem Getriebe, wobei die Kupplungseinrichtung wenigstens eine unter Vermittlung von Druckmedium betätigbare, für einen Betrieb unter Einwirkung eines Betriebsmediums vorgesehene Kupplungsanordnung aufweist, wobei auf Grundlage einer Pumpenanordnung das Druckmedium für die Betätigung der Kupplungsanordnung bereitstellbar ist und der Kupplungseinrichtung für den Betrieb unter Einwirkung des Betriebsmediums Betriebsmedium zuführbar ist. Der Inhalt dieser deutschen Offenlegungsschriften wird durch Bezugnahme vollständig in die Offenbarung der vorliegenden Anmeldung übernommen.

Betreffend das angesprochene Kupplungssystem wird, wie auch aus der DE 100 56 954 A1 und DE 101 02 874 A1 entnehmbar, insbesondere an ein Doppelkupplungssystem mit zwei unabhängig voneinander betätigbaren Kupplungsanordnungen, speziell auch an ein Nasslauf-Doppelkupplungssystem mit zwei nasslaufenden Lamellen-Kupplungsanordnung gedacht, die unter Vermittlung von in die Kupplungseinrichtung integrierten Nehmerzylindern auf hydraulischem Wege betätigbar sind. Bei der Kupplungseinrichtung kann es sich beispielsweise um eine Kupplungseinrichtung gemäß einer Konstruktion der Anmelderin handeln, wie sie in der deutschen Offenlegungsschrift DE 100 04 179 A1 beschrieben ist, deren Offenbarung ebenfalls durch Bezugnahme in die Offenbarung der vorliegenden Anmeldung einbezogen wird.

Bei Doppel- oder Mehrfachkupplungseinrichtungen werden die Kupplungsanordnungen üblicherweise als ohne anliegendes Druckmedium selbsttätig öffnende Kupplungsanordnungen, also als Kupplungsanordnungen vom NORMALERWEISE-OFFEN-Typ ausgeführt, so dass im Falle eines Systemausfalls nicht beide Kupplungsanordnungen den eingekuppelten Zustand einnehmen, was bei fahrendem Kraftfahrzeug zu schwerwiegenden Beschädigungen des Antriebsstrangs, insbesondere des Getriebes, führen könnte. Bei einem Systemausfall (etwa Stromausfall oder Ausfall der Steuerung) gehen die Kupplungsanordnungen also herkömmlich auf, so dass das Kraftfahrzeug nur noch ausrollen kann. Dies ist insoweit problematisch, als dass unter unter Umständen angezeigt wäre, dass der Fahrer das Fahrzeug noch sicher aus einer Gefahrensituation, z.B. auf der Autobahn, bringt. Dem steht die herkömmliche Unterbrechung des Kraftschlusses im Systemausfall entgegen.

Zur Lösung dieses Problems wurde schon daran gedacht, eine Kupplungsanordnung als ohne anliegendes Druckmedium selbsttätig schließende Kupplungsanordnung, also als Kupplungsanordnung vom NORMALERWEISE-GESCHLOSSEN-Typ auszuführen, während die andere Kupplungsanordnung vom NORMALERWEISE-OFFEN-Typ ist. Beschädigungen des Getriebes im Falle des Systemausfalls aufgrund über beide Kupplungsanordnungen gleichzeitig geschlossenen Kraftschluss sind dann nicht zu befürchten. Im Falle eines Systemausfalls könnte es aber unter Umständen zu einem die Beherrschung des Kraftfahrzeugs erschwerenden plötzlichen Umkuppeln zwischen den Kupplungsanordnungen kommen, nämlich wenn momentan die Kupplungsanordnung vom NORMALERWEISE-OFFEN-Typ eingekuppelt ist und dann etwa der Strom oder die Steuerung ausfällt, mit der Folge, dass die bisher eingekuppelte Kupplungsanordnung sich öffnet und die andere Kupplungsanordnung (die vom NORMALERWEISE-GESCHLOSSEN-Typ) sich schließt.

Die Erfindung trachtet, zumindest einen Notfahrbetrieb des Kraftfahrzeugs unabhängig von einer elektrischen Energieversorgung oder/und der ordnungsgemäßen Funktion einer elektronischen Steuer/Regelschaltung zu gewährleisten, zumindest für einen Notbetriebszeitraum, der etwa für ein Rangieren des Kraftfahrzeugs oder für ein Wegfahren des Kraftfahrzeugs aus einem Gefahrbereich ausreicht.

Zur Lösung dieser Aufgabe schlägt die Erfindung eine zumindest der Kupplungseinrichtung zugeordnete Druckmedium-Notversorgung vor, auf deren Grundlage zumindest für einen zumindest einen Notfahrbetrieb des Kraftfahrzeugs ermöglichenden Notbetriebszeitraum unabhängig von einer elektrischen Energieversorgung oder/und unabhängig von ordnungsgemäßer Funktion einer elektronischen Steuer/Regelschaltung Druckmedium für die Betätigung der Kupplungsanordnung oder zumindest zum Halten der Kupplungsanordnung in einem zumindest teilweise eingekuppelten Zustand bereitstellbar ist.

Es wird vor allem daran gedacht, dass die Kupplungseinrichtung vom NORMALERWEISE-OFFEN-Typ ist bzw. dass im Falle mehrerer Kupplungseinrichtungen diese alle vom NORMALERWEISE-OFFEN-Typ sind. Ferner wird vor allem daran gedacht, dass im Falle eines Ausfalls der elektrischen Energie das Druck-Steuer/Regel-Ventil keinen hinreichenden Betätigungsdruck für die Betätigung der Kupplungsanordnung oder zum Halten der Kupplungsanordnung in dem zumindest teilweise eingekuppelten Zustand bereitstellt und dass auf Grundlage der Druckmedium-Notversorgung im Falle des Ausfalls der elektrischen Energie oder/und im Falle einer Fehlfunktion der elektronischen Steuer/Regelschaltung Druckmedium auf einem zum zumindest teilweisen Einkuppeln der Kupplungsanordnung oder zumindest zum Halten der Kupplungsanordnung in einem zumindest teilweise eingekuppelten Zustand ausreichenden Druckniveau bereitstellbar ist.

Nach den Erfindungsvorschlägen kann der Kraftschluss zwischen Antriebseinheit und Getriebeeingang über das Schließen bzw. Geschlossenhalten der Kupplungsanordnung bzw. einer der Kupplungsanordnungen aufrecht erhalten werden. Dadurch kann das Fahrzeug sicher aus einer Gefahrensituation gebracht werden.

Wie sich aus der Würdigung des Standes der Technik schon ergibt, kann die Kupplungseinrichtung für einen Betrieb unter Einwirkung eines Betriebsmediums vorgesehen sein, wobei der Kupplungseinrichtung auf Grundlage der Pumpenanordnung Betriebsmedium für den Betrieb unter Einwirkung des Betriebsmediums zuführbar ist. Ferner kann das Getriebe vermittels einer zugeordneten Aktuatorik unter Vermittlung von Druckmedium betätigbar sein, wobei das Druckmedium für die Betätigung des Getriebes vorzugsweise auf Grundlage der auf dem Getriebe zugeordneten Pumpenanordnung bereitstellbar ist.

Es ist nicht ausgeschlossen, dass die Druckmedium-Notversorgung das Druckmedium auf Grundlage von von in einem Druckspeicher gespeicherten Druckmedium bereitstellt. Für einen hinreichend langen Notbetriebszeitraum ist dann unter Umständen aber ein sehr großer und kostenaufwendiger Druckspeicher erforderlich. Es ist demgegenüber deshalb bevorzugt, dass die Druckmedium-Notversorgung das Druckmedium auf Grundlage von von der Pumpenanordnung bereitgestelltem Druckmedium bereitstellt. Hierdurch kann sogar ein Notfahrbetrieb des Kraftfahrzeugs für einen unbegrenzten bzw. nur durch den Kraftstoffvorrat oder andere Faktoren begrenzten Zeitraum ermöglicht sein. Es wird in diesem Zusammenhang vor allem daran gedacht, dass die Pumpenanordnung wenigstens eine durch die Antriebseinheit antreibbare Pumpe aufweist, auf deren Grundlage das Druckmedium auf dem einem/dem zum zumindest teilweisen Einkuppeln der Kupplungsanordnung oder zumindest zum Halten der Kupplungsanordnung in einem zumindest teilweise eingekuppelten Zustand ausreichenden Druckniveau sowie vorzugsweise auf dem Betätigungsdruck bereitstellbar ist.

Je nach Auslegung des Druckmediumsystems kann die Druckmedium-Notversorgung zweckmäßig wenigstens eine Druckreduzier-Einrichtung, vorzugsweise wenigstens ein Druckreduzierventil aufweisen, durch die ein auf einer Abgabeseite der Pumpenanordnung bzw. der wenigstens einen Pumpe im durch die Antriebseinheit angetriebenen Zustand herrschendes Druckniveau auf ein/das zum zumindest teilweisen Einkuppeln der Kupplungsanordnung oder zumindest zum Halten der Kupplungsanordnung in einem zumindest teilweise eingekuppelten Zustand ausreichende(s), auf die Druckauslegung eines kupplungseinrichtungsseitigen Druckmediumsystemabschnitt oder/und wenigstens eines Betätigungszylinders der Kupplungssystems abgestimmte(s) Druckniveau reduzierbar ist.

Es wird besonders bevorzugt vorgeschlagen, dass das Druckmediumsystem dafür ausgelegt ist, auf einen Ausfall der elektrischen Energieversorgung anzusprechen und in Reaktion auf einen Ausfall der elektrischen Energieversorgung umzuschalten von einem ersten Druckmediumversorgungszustand, in dem das Druck-Steuer/Regelventil das Druckmedium bereitstellt bzw. dessen Betätigungsdruck einstellt, in einen zweiten Druckmediumversorgungszustand, in dem die Druckmedium-Notversorgung das Druckmedium bereitstellt. Damit ist eine manuelle Einschaltung der Druckmedium-Notversorgung durch den Fahrer entbehrlich.

In diesem Zusammenhang kann man zweckmäßig vorsehen, dass wenigstens ein Umschaltventil in einem ersten Schaltzustand, der dem ersten Druckmediumversorgungszustand entspricht, eine Druckmediumverbindung zwischen der Druck-Steuer/Regelventil und einem/dem Betätigungszylinder der Kupplungseinrichtung freigibt und eine zum Betätigungszylinder führende Druckmediumverbindung der Druckmedium-Notversorgung unterbricht und in einem zweiten Schaltzustand, der dem zweiten Druckmediumversorgungszustand entspricht, die Druckmediumverbindung zwischen dem Druck-Steuer/Regelventil und dem Betätigungszylinder der Kupplungseinrichtung unterbricht und die zum Betätigungszylinder führende Druckmediumverbindung der Druckmedium-Notversorgung freigibt. Es sei erwähnt, dass es sich bei der Druckmediumverbindung in der Regel um eine Hydraulikverbindung und bei dem Betätigungszylinder in der Regel um einen hydraulischen Betätigungs- oder Nehmerzylinder handeln wird.

Weiterbildend wird vorgeschlagen, dass das Umschaltventil als elektrisches ansteuerbares Ventil ausgeführt ist und im bestromten Zustand den ersten Schaltzustand und im nicht bestromten Zustand den zweiten Schaltzustand einnimmt. Das Umschaltventil spricht dann selbst unmittelbar auf einen elektrischen Energieausfall an und aktiviert gewissermaßen die Druckmedium-Notversorgung. Alternativ wird vorgeschlagen, dass das Umschaltventil als ein durch Druckmedium ansteuerbares Ventil ausgeführt ist und im bedruckten Zustand einen vom ersten und zweiten Schaltzustand, vorzugsweise den zweiten Schaltzustand einnimmt, und im nicht bedruckten Zustand den anderen vom ersten und zweiten Schaltzustand, vorzugsweise den ersten Schaltzustand, einnimmt. In diesem Zusammenhang wird beispielsweise daran gedacht, dass das Druckmediumsystem wenigstens ein elektrisch ansteuerbares Ventil aufweist, das im nicht bestromten Zustand Druckmedium in Richtung zum Umschaltventil freigibt, um dieses vom ersten in den zweiten Schaltzustand umzuschalten bzw. im zweiten Schaltzustand zu halten. Es spricht dann also das elektrisch ansteuerbare Ventil auf einen Ausfall der elektrischen Energie an, um das Umschaltventil umzuschalten und hierdurch gewissermaßen die Druckmedium-Notversorgung zu aktivieren. Anstelle eines elektrisch ansteuerbaren Ventils kann auch ein durch Druckmedium ansteuerbares Ventil hierzu eingesetzt werden. Es wird dementsprechend weiter alternativ vorgeschlagen, dass das Druckmediumsystem wenigstens ein durch Druckmedium ansteuerbares Ventil aufweist, das in einem einen Ausfall der Energieversorgung indizierenden Ventilzustand, vorzugsweise in einem nicht bedrucktem Zustand, Druckmedium in Richtung zum Umschaltventil freigibt, um dieses vom ersten in den zweiten Schaltzustand umzuschalten bzw. im zweiten Schaltzustand zu halten.

Weiterbildend wird vorgeschlagen, dass das durch Druckmedium ansteuerbare Ventil an wenigstens einem Steuereingang als Steuerdruck wenigstens einen Vorsteuerdruck empfängt, welcher zur Vorsteuerung wenigstens eines anderen Ventils dient. Vorteilhaft kann man eine Auswahl-Ventilanordnung vorsehen, die den größten von mehreren verschiedenen Vorsteuerdrücken dem Steuereingang des Ventils zuführt.

Eine besonders bevorzugte Ausgestaltung der Druckmedium-Notversorgung bzw. des Druckmediumsystems zeichnet sich dadurch aus, dass das Druckmediumsystem dafür ausgelegt ist, direkt oder indirekt auf eine momentane Betriebsdrehzahl der vorzugsweise als Brennkraftmaschine ausgeführten Antriebseinheit anzusprechen und in Abhängigkeit von der Betriebsdrehzahl oder einer diese wiederspiegelnden Größe die Bereitstellung des Druckmediums an die Kupplungseinrichtung zum Halten der Kupplungsanordnung in dem zumindest teilweise eingekuppelten Zustand freizugeben oder zu unterbrechen. Hierdurch kann beispielsweise erreicht werden, dass ein als Antriebseinheit dienender Verbrennungsmotor durch die eingerückte Kupplungsanordnung nicht abgewürgt werden kann, was äußerst sicherheitskritisch wäre, da dann die Lenk- und Bremsunterstützung des Kraftfahrzeugs ausfallen könnte und auch der Notfahrbetrieb nicht mehr gewährleistet wäre. Man kann auf diese Weise insbesondere erreichen, dass die geschlossene Kupplungsanordnung beim Unterschreiten einer kritischen Motordrehzahl, z.B. der Leerlaufdrehzahl, wieder geöffnet wird, so dass der Motor nicht abgewürgt wird und dadurch die Nebenaggregate (etwa Lenk- und Bremskrafthilfe) nicht zum Stillstand gebracht werden.

Es wird in diesem Zusammenhang allgemein vorgeschlagen, dass das Druckmediumsystem dafür ausgelegt ist, die Bereitstellung des Druckmediums an die Kupplungseinrichtung zum Halten der Kupplungsanordnung in dem zumindest teilweise eingekuppelten Zustand dann zu unterbrechen, wenn die momentane Betriebsdrehzahl einen unteren Schwellenwert unterschreitet bzw. die die Betriebsdrehzahl wiederspiegelnde Größe bezogen auf einen Vergleichswert indiziert, dass die momentane Betriebsdrehzahl einen unteren Schwellenwert unterschreitet.

Eine bevorzugte Ausführungsform zeichnet sich dadurch aus, dass das Druckmediumsystem dafür ausgelegt ist, im zweiten Druckmediumversorgungszustand die zum Betätigungszylinder führende Druckmediumverbindung der Druckmedium-Notversorgung in Abhängigkeit von der Betriebsdrehzahl bzw. der diese wiederspiegelnden Größe zu unterbrechen oder/und freizugeben oder in Abhängigkeit von der Betriebsdrehzahl bzw. der diese wiederspiegelnden Größe zwischen dem ersten und dem zweiten Druckmediumversorgungszustand umzuschalten.

Zur konkreten Realisierung der Weiterbildungsvorschläge kann man beispielsweise vorsehen, dass wenigstens ein Ventil durch einen die Betriebsdrehzahl wiederspiegelnden Druckmediumdruck oder Betriebsmediumdruck oder Betriebsmediumdifferenzdruck umschaltbar ist zwischen einem ersten Ventilzustand, in dem es eine/die Druckmediumverbindung freigibt, und einem zweiten Ventilzustand, in dem es die Druckmediumverbindung unterbricht. Der bauliche Aufwand zur Realisierung der angesprochenen Funktion ist damit gering. Dies gilt insbesondere dann, wenn die Druckmediumverbindung das elektrisch ansteuerbare Ventil bzw. das durch die Druckmedium ansteuerbare Ventil mit dem Umschaltventil verbindet oder wenn die Druckmediumverbindung die zum hydraulischen Betätigungszylinder führende Hydraulikverbindung der Druckmedium-Notversorgung ist.

Als besonders zweckmäßig wird in diesem Zusammenhang vorgeschlagen, dass ein abgabeseitig der Pumpe herrschender Druckmediumdruck oder Betriebsmediumdruck oder ein in einer zur Kupplungseinrichtung führenden Betriebsmediumverbindung vorzugsweise an einer Blende abfallender Betriebsmediumdifferenzdruck als die die Betriebsdrehzahl wiederspiegelnde Größe dem Ventil zuführbar ist. Der abgabeseitig der Pumpe herrschende Druck bzw. der Betriebsmedium-Differenzdruck ist eine ohnehin zugängliche bzw. ohne wesentlichen Aufwand zur Verfügung stellbare Größe, die die momentane Betriebsdrehzahl der Antriebseinheit hinreichend gut wiederspiegelt.

Aus den obigen Ausführungen ergibt sich schon, dass die Kupplungsanordnung eine nasslaufende Kupplungsanordnung sein kann und dass der Betrieb unter Einwirkung des Betriebsmediums ein nasslaufender Betrieb sein kann und dass das Betriebsmedium eine Betriebsfllüssigkeit, ggf. eine Kühlflüssigkeit, insbesondere ein Kühlöl, sein kann. Ferner oder zumindest indirekt wurde schon erwähnt, dass die Kupplungsanordnung als Lamellen-Kupplungsanordnung ausgebildet sein kann. Es wird vor allem daran gedacht, dass das Druckmedium ein hydraulisches Druckmedium, insbesondere ein Hydrauliköl, ist, das ggf. auch als Betriebsflüssigkeit oder Kühlflüssigkeit dient.

Es wird daran gedacht, dass die Kupplungseinrichtung als Mehrfach-Kupplungseinrichtung, insbesondere Doppel-Kupplungseinrichtung, ausgeführt ist und eine erste Kupplungsanordnung, der wenigstens ein erster Betätigungszylinder zugeordnet ist, und eine zweite Kupplungsanordnung, der wenigstens ein zweiter Betätigungszylinder zugeordnet ist, aufweist, wobei den beiden Zylindern unabhängig voneinander von der Pumpenanordnung bereitgestelltes Medium als Druckmedium zuführbar ist, und, dass den beiden Betätigungszylindern unabhängig voneinander von der Druckmedium-Notversorgung bereitgestelltes Druckmedium zuführbar ist. Man kann so beispielsweise ein Ein- und Auskuppeln bzw. Umkuppeln zwischen den Kupplungsanordnungen auf Grundlage der Druckmedium-Notversorgung vorsehen.

Demgegenüber ist es bevorzugt, dass nur einem vorbestimmten der Betätigungszylinder von der Druckmedium-Notversorgung bereitgestelltes Druckmedium zuführbar ist. Diese Ausgestaltung ist dann besonders zweckmäßig, wenn man nur die Bereitstellung eines zum Halten der Kupplungsanordnung in einem zumindest teilweise eingekuppelten Zustand bzw. zum Einkuppeln der Kupplungsanordnung in diesem Zustand ausreichenden Druckmediumdrucks ohne weitere Betätigung der Kupplungsanordnung zum wahlweisen Ein- und Auskuppeln bzw. Umkuppeln zwischen den Kupplungsanordnungen vorsieht, ggf. aber mit der Funktion zum Auskuppeln in Abhängigkeit von der momentanen Betriebsdrehzahl der Antriebseinheit.

Es wird in diesem Zusammenhang vor allem daran gedacht, dass das Druckmediumsystem dafür ausgelegt ist, demjenigen Betätigungszylinder als vorbestimmten Betätigungszylinder von der Druckmedium-Notversorgung bereitgestelltes Druckmedium zuzuführen, der der momentan alleine oder stärker eingekuppelten Kupplungsanordnung zugeordnet ist. Hierzu kann das Druckmediumsystem wenigstens ein auf einen Differenzdruck zwischen einem auf den ersten Betätigungszylinder wirkenden Druckmediumdruck und einem auf den zweiten Betätigungszylinder wirkenden Druckmediumdruck ansprechendes Ventil aufweisen. Es wird in diesem Zusammenhang beispielsweise daran gedacht, dass das auf den Differenzdruck ansprechende Ventil in einem ersten Ventilzustand eine erste Druckmediumverbindung der Druckmedium-Notversorgung in Richtung zum ersten Nehmerzylinder freigibt und eine zweite Druckmediumverbindung der Druckmedium-Notversorgung in Richtung zum zweiten Nehmerzylinder unterbricht und in einem zweiten Ventilzustand die erste Druckmediumverbindung unterbricht und die zweite Druckmediumverbindung freigibt. Eine andere Möglichkeit ist, dass dem ersten und dem zweiten Betätigungszylinder jeweils ein eigenes Umschaltventil zugeordnet ist, und dass das auf den Differenzdruck ansprechende Ventil in einem ersten Ventilzustand einer erste Druckmediumverbindung der Druckmedium-Notversorgung in Richtung zum dem ersten ersten Nehmerzylinder zugeordneten Umschaltventil freigibt und eine zweite Druckmediumverbindung der Druckmedium-Notversorgung in Richtung zum dem zweiten Nehmerzylinder zugeordneten Umschaltventil unterbricht und in einem zweiten Ventilzustand die erste Druckmediumverbindung unterbricht und die zweite Druckmediumverbindung freigibt. Hierbei können die erste und die zweite Druckmediumverbindung vom elektrisch ansteuerbaren bzw. durch Druckmedium ansteuerbaren Ventil zum jeweiligen Umschaltventil führen.

Die Erfindung stellt ferner ein Kupplungssystem für einen erfindungsgemäßen Antriebsstrang bereit, das eine Druckmedium-Notversorgung und ein nicht zwingend auch die Pumpenanordnung umfassendes Druckmediumsystem entsprechend den vorstehenden Erfindungs- und Weiterbildungsvorschlägen aufweist.

Ferner stellt die Erfindung ein Druckmediumsystem für einen erfindungsgemäßen Antriebsstrang bzw. erfindungsgemäßes Kupplungssystem bereit, das die sich auf das Druckmediumsystem bzw. die Bereitstellung von Druckmedium beziehenden Merkmale der vorangehend erläuterten Erfindungs- und Weiterbildungsvorschläge aufweist, ggf. aber nicht die Pumpenanordnung selbst umfasst.

Die Erfindung wird im Folgenden anhand von in den Figuren gezeigten Ausführungsbeispielen näher erläutert.
- Fig. 1: zeigt ein Beispiel für ein einer nasslaufenden, hydraulisch betätigbaren Doppelkupplungseinrichtung und einem hydraulisch betätigbaren Doppelkupplungsgetriebe zugeordnetes Hydrauliksystem, ggf. als Teil eines erfindungsgemäßen Antriebsstrangs, das in Verbindung mit Ergänzungen bzw. Konkretisierungen gemäß Fig. 2, 3 und 4 ein Ausführungsbeispiel der vorliegenden Erfindung in zwei Varianten repräsentiert.
- Fig. 2: zeigt in den Teilfiguren 2a und 2b zwei Beispiel, wie ein in dem Hydrauliksystem der Fig. 1 als Schaltsymbol dargestelltes Volumenstrom-Regelventil konkret ausgeführt und verschaltet sein könnte.
- Fig. 3: ist eine Ergänzung zum Schaltplan der Fig. 1, die ein Druckreduzierventil einer Druckmedium-Notversorgung für die Doppelkupplungseinrichtung zu deren Betätigung oder zumindest zum Halten einer der Kupplungsanordnungen in einem eingerückten Zustand in zwei Varianten (Teilfigur 3a und Teilfigur 3b) zeigt.
- Fig. 4: zeigt weitere Ergänzungen des Schaltplans der Fig. 1 in Zuordnung zu sowohl in Fig. 1 als auch in Fig. 4 enthaltenen Druckregelventilen und Nehmerzylindern der Kupplungseinrichtung, wobei Details X1 und X2 an den mit X1 und X2 markierten Stellen in Fig. 1 in die Schaltung der Fig. 1 eingefügt sind.
- Fig. 5: zeigt ein weiteres Ausführungsbeispiel für ein erfindungsgemäßes Hydrauliksystem, ggf. als Teil eines erfindungsgemäßen Antriebsstrangs, das weitgehend dem Ausführungsbeispiel der Fig. 1 bis 4 entspricht und die Ventile der Fig. 4 in den Schaltplan der Fig. 4 direkt integriert zeigt.
- Fig. 6: zeigt ein weiteres Ausführungsbeispiel für ein erfindungsgemäßes Hydrauliksystem, ggf. als Teil eines erfindungsgemäßen Antriebsstrangs, das bis auf in Abweichung von Fig. 5 als vorgesteuerte Ventile ausgeführte Ventile dem Ausführungsbeispiel der Fig. 5 entspricht.
- Fig. 7: zeigt einen Ausschnitt aus dem Schaltplan der Fig. 6 entsprechend der Darstellung in Fig. 4.
- Fig.8: zeigt ein weiteres Ausführungsbeispiel für ein erfindungsgemäßes Hydrauliksystem.
- Fig.9: zeigt ein weiteres Ausführungsbeispiel für ein erfindungsgemäßes Hydrauliksystem gemäß Fig. 8
- Fig.10: zeigt ein weiteres Ausführungsbeispiel für ein erfindungsgemäßes Hydrauliksystem.

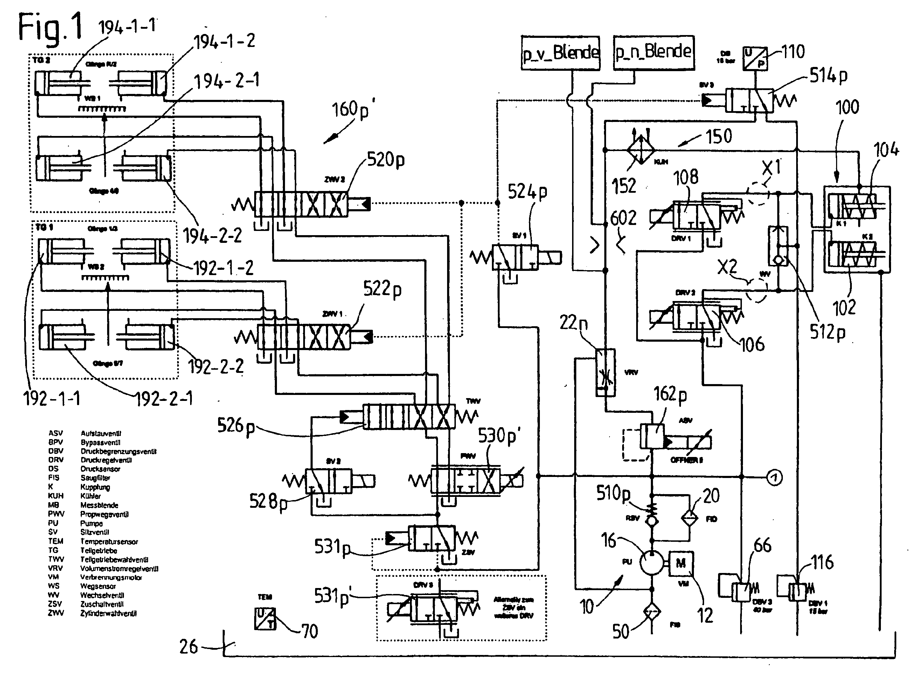

Fig. 1 zeigt ein Hydrauliksystem, das hinsichtlich anderer Aspekte im Detail ausgehend von anderen Ausführungsbeispielen in einer zeitgleich mit dieser Anmeldung eingereichten deutschen Patentanmeldung mit dem Titel "Kraftfahrzeug-Antriebsstrang mit einer Pumpenanordnung zur Versorgung einer Kupplungseinrichtung mit Druckmedium oder/und Betriebsmedium oder/und zur Versorgung eines Getriebes mit Druckmedium, entsprechende Pumpenanordnung und entsprechende Betätigungsanordnung für die Getriebebetätigung" beschrieben ist, die die folgenden Prioritäten von deutschen Patentanmeldungen in Anspruch nimmt:
18.11.2002 - DE - 102 53 658.9;
18.11.2002 - DE - 102 53 663.5;
26.02.2003 - DE - 103 08 296.4 und
09.04.2003 - DE - 103 16 229.1.

Der Offenbarungsgehalt dieser zeitgleich eingereichten deutschen Patentanmeldung und der genannten Prioritätsanmeldungen wird durch Bezugnahme vollständig in die Offenbarung der vorliegenden Anmeldung einbezogen. Aus diesem Offenbarungsgehalt ergeben sich vorteilhafte Ausgestaltungsmöglichkeiten des Hydrauliksystems, sowie weitere Einzelheiten der im Folgenden beschriebenen Ausführungsbeispiele, die im Zusammenhang mit der Erläuterung der Erfindung von untergeordnetem Interesse sind.

Das Hydrauliksystem der Fig. 1 weist eine einzige, verbrennungsmotorisch angetriebene Pumpe 16, insbesondere eine Konstantpume 16, auf. Diese Pumpe versorgt sowohl einen Kupplungsteil (Kupplungsbetätigung und Kupplungskühlung) als auch einen Getriebebetätigungsabschnitt 160p' des Hydrauliksystems. Der Pumpe ist ein Saugfilter 50 vorgeschaltet und ein Druckfilter 20 nachgeschaltet. Man kann auch entweder nur einen Druckfilter oder nur einen Saugfilter vorsehen, je nach Empfindlichkeit der verwendeten Ventile. Für eine Fail-Safe-Funktion ist im Druckfilter 20 ein Rückschlagventil 510p parallel geschaltet, so dass trotz verstopftem Druckfilter noch ein Betrieb möglich ist, unter Inkaufnahme von Gefährdungen für die nachfolgenden Ventile. Man kann auch eine derartige Auslegung des Rückschlagventils 510p vorsehen, dass der Druckfilter 20 als Nebenstromfilter arbeitet.

Im stationären Fahrbetrieb, wenn nicht geschaltet wird, wird der von der Pumpe geförderte Ölvolumenstrom an einem Aufstauventil 162p, einem Proportional-Druckbegrenzungsventil, aufgestaut, auf einen Druck, der einen gewissen Wert über dem Druck liegt, der im Hinblick auf die hydraulische Kupplungsbetätigung dem dem an der Doppelkupplung anliegenden Motormoment entsprechenden Kupplungsmoment entspricht. Das Aufstauventil ist vom Öffnertyp, so dass es im nicht bestromten Zustand auf einen maximalen Aufstaudruck, in Abhängigkeit von dem Ölzufluss von der Pumpe 16, aufstaut. Das übertragene (übertragbare) Kupplungsmoment wird für die beiden Kupplungsanordnungen der Doppelkupplung von je einem Proportional-Druckregelventil 106 bzw. 108 eingeregelt, das einen der ersten Kupplungsanordnung zugeordneten ersten hydraulischen Nehmerzylinder 104 bzw. einen der zweiten Kupplungsanordnung zugeordneten zweiten hydraulischen Nehmerzylinder 102 mit Hydraulikdruck beaufschlagt.

Es ist ein Drucksensor und ein Druckbegrenzungsventil in Zuordnung zu den Ventil-Zylinder-Kombinationen 108, 104 und 106, 102 vorgesehen, nämlich der Drucksensor 110, zu dem ein Umschaltventil 512p und ein hydraulisch betätigbares Umschaltventil 514p jeweils den höheren der beiden Drücken zwischen Ventil 108 und Betätigungszylinder 104 einerseits und Ventil 106 und Betätigungszylinder 102 andererseits durchlässt, sofern nicht in Abhängigkeit von in dem Getriebebetätigungsabschnitt auftretenden Steuerdrücken das Umschaltventil 514p einen eingangsseitig eines Ölkühlers 152 auftretenden Öldruck zum Drucksensor 110 durchlässt.

Es sind Druckbegrenzer 66 und 116 vorgesehen, die einen Druck ausgangsseitig der Pumpe 16 bzw. ausgangsseitig der Druckregelventile 106, 108 absichern.

Das durch das Aufstauventil 162p abfließende Ölvolumen wird von einem Volumenstrom-Regelventil 22n durch den Ölkühler 152 zur Kühlung in die Doppelkupplung oder/und zurück in den Ansaugbereich der Pumpe 16 geleitet, je nach gewünschtem Kühlölvolumenstrom. Die Rückleitung des Öls in den Ansaugbereich der Pumpe hat den Vorteil, dass die Pumpe beim Ansaugen des Öls unterstützt wird, was den Pumpenfüllungsgrad verbessert und die Kavitationsneigung verringert. Es kann durchaus Situationen geben, in denen es gewünscht ist, den von der Pumpe bereitgestellten Ölstrom ganz zurück in den Ansaugbereich der Pumpe zu leiten, so dass nichts mehr zur Kupplung fließt.

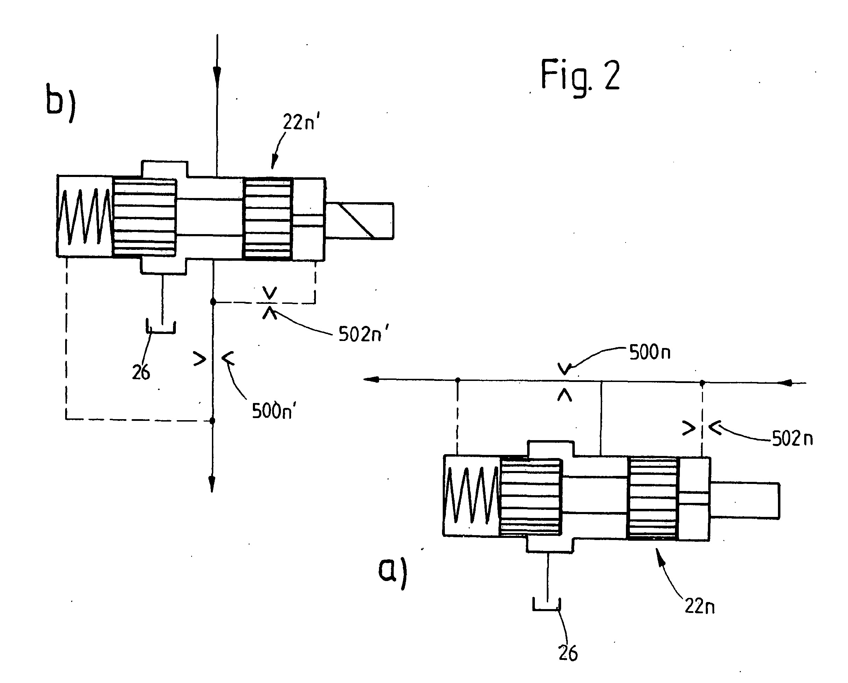

Bezug nehmend auf Fig. 2 kann das Volumenstrom-Regelventil 22n als Zwei-Wege-Stromregelventil mit Messblende im Bypass ausgeführt sein. Durch die aktive Betätigung eines Schiebers, etwa über Magnetkraft, können auch geringere Volumenströme zur Kühlung der Kupplung eingestellt werden als der sich durch die Druckdifferenz an einer Messblende einstellende Volumenstrom. Um eine völlige Abschaltung des Kühlölvolumenstroms zu gewährleisten, kann im Falle einer Einbausituation entsprechend Fig. 2a ein zusätzliches Druckbegrenzungsventil zwischen Volumenstrom-Regelventil 22n und dem Ölkühler 152 eingebaut werden, um einen erhöhten Gegendruck in der Zuleitung zur Kupplung zu erreichen.

Das zweiseitig mit Hydraulikdruck beaufschlagte Volumenstrom-Regelventil 22n gemäß Fig. 1 bzw. Fig. 2 arbeitet nach dem Druckwaage-Prinzip. In der Kühlölleitung befindet sich die angesprochene Messblende 500n, an der in Abhängigkeit vom Volumenstrom ein Differenzdruck abfällt. Dieser Differenzdruck, der den momentanen Volumenstrom repräsentiert, wird an den beiden Seiten (Steuereingängen) des Volumenstrom-Regelventils 22n angelegt. Dem Druck vor der Messblende 500n plus einer einstellbaren Magnetkraft wird der Druck nach der Blende plus eine Federkraft gegenübergestellt. Um für ein schnelles Schließen des Volumenstrom-Regelventils 22n im Falle eines Druckanstiegs zu sorgen und damit einen Ausfall der Kupplungskühlung zu verhindern, kann zwischen dem pumpenseitigen Druckabgriff und dem der Federkraft entgegenwirkenden Steuereingang vorteilhaft ein Dämpfer 502n angeordnet sein. Das Volumenstrom-Regelventil kann dann schnell auf einen Druckanstieg ansprechen, sich in Schließrichtung verstellen und damit den Abfluss zur Eingangsseite der Pumpe reduzieren.

Fig. 2a zeigt schematisch eine konkrete Ausführung des Volumenstrom-Regelventils 22n in einer zweckmäßigen Einbausituation im Hydrauliksystem der Fig. 1. Der zur Kupplung geführte Kühlölvolumenstrom geht am Volumenstrom-Regelventil vorbei und die Rückführung zur Eingangsseite der Pumpe geht durch das Volumenstrom-Regelventil 22n hindurch. Ein ggf. vorgesehener weiterer Auslass des Volumenstrom-Regelventils 22n ist geschlossen und wird nicht benutzt.

Demgegenüber zeigt Fig. 2b eine andere Einbausituation für das nun mit 22n' bezeichnete Volumenstrom-Regelventil, bei der der Kühlölstrom zur Kupplung durch das Ventil 22n' hin durchgeht. Das Ventil 22n' ist also in Reihe zur Messblende 500n' geschaltet. Der Steuerkolben des Ventils teilt den zufließenden Mediumstrom auf den in Richtung zur Kupplung gehenden Kühlölvolumenstrom und den zur Eingangsseite der Pumpe bzw. in das Reservoir 26 (den Tank) zurückgehenden Rückführungsstrom auf, in Abhängigkeit vom Druckabfall an der Messblende 500n' und der Bestromung des Solenoids des Ventils.

Es sei angemerkt, dass anstelle einer Einstellung des Kühlölvolumenstroms über die Bestromung eines dem Ventil zugeordneten Solenoids oder dergleichen auch eine Volumenstromsteuerung/Regelung auf Grundlage einer verstellbaren Messblende in Betracht kommt. Beispielsweise kann eine über einen Elektromagnet (Solenoid) oder eine hydraulische Druckübersetzung angesteuerte Messblende verwendet werden.

Bezug nehmend wiederum auf Fig. 1 sei darauf hingewiesen, dass auch in Fig. 1 eine direkte Anströmung des Volumenstrom-Regelventils entsprechend Fig. 2b als Alternative möglich ist. Ein zusätzlicher Gegendruck bzw. Widerstand in der Kühlölleitung nach dem Volumenstrom-Regelventil ist dann nicht erforderlich, wenn eine völlige Abschaltung des Kühlölvolumenstroms zur Kupplung gewünscht ist. Es sei angemerkt, dass durchaus auch andere Bauformen als Volumenstrom-Regelventile in Betracht kommen, insbesondere auch ein Drei-Wege-Strom-Regelventil. Ferner ist anstelle einer direkten Ansteuerung über Magnetkraft oder einer hinsichtlich des Durchlasswiderstands einstellbaren Messblende auch eine Ausführung des Volumenstrom-Regelventils als vorgesteuertes Ventil möglich.

Die Getriebebetätigung erfolgt beim hier zugrunde gelegten Beispiel über vier Schaltstangen, die die Gänge 1 bis 7 und R schalten. Bestätigt werden die Schaltstangen durch jeweils acht einfach wirkende Zylinder (vier für jedes Teilgetriebe), die jeweils paarweise einer der Schaltstangen zugeordnet sind. Es handelt sich um die Zylinder 192-1-1 und 192-1-2; 192-2-1 und 192-2-2; 194-1-1 und 194-1-2 bzw. 194-2-1 und 194-2-2.

Die beiden Schaltstangen des Teilgetriebes TG2, denen die Zylinder 194 zugeordnet sind und die für die geraden Vorwärtsgänge und den Rückwärtsgang R zuständig sind, werden von einem als Schieberventil ausgeführten Zylinderwahlventil 520p angesteuert, und die Schaltstangen des Teilgetriebes TG1, denen die Zylinder 192 zugeordnet sind und die für die ungeraden Vorwärtsgänge zuständig sind, werden durch das ebenfalls als Schieberventil ausgeführte Zylinderwahlventil 522p angesteuert.

Die ggf. auch als Schaltgassenschieber bezeichenbaren Zylinderwahlventile 520p, 522p sind als hydraulisch vorgesteuerte 8/2-Wege-Ventile ausgeführt, die selbst durch das Schaltventil 524p angesteuert werden. Die beiden Zylinderwahlventile 520p und 522p leiten das zugeführte Drucköl jeweils zu einem zugeordneten Zylinderpaar zu, während die Zylinderräume des anderen Zylinderpaares mit dem Ölreservoir verbunden sind, also im Wesentlichen drucklos gemacht sind. Den beiden Zylinderwahlventilen ist gemeinsam ein Teilgetriebe-Wählventil 526p vorgeschaltet, das ebenfalls als hydraulisch vorgesteuertes 8/2-Wege-Ventil ausgeführt ist. Das Teilgetriebe-Wählventil wird von einem Schaltventil 528p angesteuert. Das Teilgetriebe-Wählventil 526p leitet das ihm von einem beispielsweise als Gangwählventil bezeichenbares Ventil 530p' zugeführten Drucköl entweder dem Zylinderwahlventil 520p zur Betätigung des Teilgetriebes TG2 oder dem Zylinderwahlventil 522p zur Betätigung des Teilgetriebes TG1 zu. Das Gangwählventil 530p' ist vorliegend als Proportionalwegeventil, genauer als proportionales 4/3-Wege-Ventil ausgeführt. Es ist so ausgestaltet, dass zum Verschieben einer jeweiligen Schaltstange jeweils immer nur einer der beiden einfach wirkenden Zylinder mit Drucköl beaufschlagt wird. Der jeweils andere der gleichen Schaltstange zugeordnete Zylinder ist über das Ventil 530p' zum Tank geöffnet.

Die drei Stellungen des Gangwählventils 530p' haben folgende Funktionen:
- In einer der Ruhestellung infolge der Federkraft entsprechenden ersten Stellung wird das Drucköl in einen der beiden Zylinder des jeweiligen Zylinderpaares geleitet und der andere Zylinder mit dem Öltank verbunden. Dadurch verfährt die Schaltstange in der dem erstgenannten Zylinder entsprechenden Richtung.
- Durch Magnetkraft kann der Schieber des Ventils in eine einer Sperrposition entsprechende zweite Stellung verschoben werden. In dieser Stellung ist der Zufluss ebenso wie der Abfluss aus den Zylindern gesperrt, so dass diese in ihrer momentanen Betätigungsstellung bleiben. Man kann in Abweichung von Fig. 1 auch Vorsehen, dass in der zweiten Ventilstellung die beiden Zylinder des betreffenden Zylinderpaares über das Gangwählventil 530p' miteinander verbunden sind.
- Bei voller Bestromung des Magneten wird der Schieber des Ventils in die Endstellung (dritte Stellung) verschoben. In dieser Stellung wird das Drucköl in den anderen, in der ersten Ventilstellung (Ruhestellung) mit dem Öltank verbundenen Zylinder geleitet, während der oben im Zusammenhang mit der ersten Ventilstellung erstgenannte Zylinder nun über das Ventil 530p' mit dem Tank verbunden ist.

Vorteilhaft ist, dass mittels des Aufstauventils 162p ein Betätigungsdruckniveau und damit eine von den Zylindern ausgeübte Schaltkraft eingestellt werden kann und dass - bei entsprechender Ausbildung - mittels des Proportionalwegeventils 530p' oder durch ein zusätzliches Ventil durch Einstellung des Volumenstroms die Betätigungsgeschwindigkeit, also die Schaltgeschwindigkeit, eingestellt werden kann. Die momentane Position der Schaltstangen kann mittels eines jeweiligen Wegsensors erfasst werden.

Dem Gangwählventil 530p' und dem Schaltventil 528p ist ein hydraulisch betätigbares Zuschaltventil 531p vorgeschaltet. Dieses dient dazu, dass im Fahrbetrieb, wenn am Getriebe nicht geschaltet wird, die Ölversorgung der Ventile für die Getriebeaktuatorik unterbrochen wird. Das Zuschaltventil 531p wird durch den durch das Aufstauventil 162p eingestellten Öldruck angesteuert. Der Öffnungsdruck für das Zuschaltventil 531p kann zweckmäßig so ausgelegt werden, dass er einen gewissen Wert über dem Druck liegt, der dem eine Übertragung des maximalen Motormoments durch die Kupplungsanordnungen entsprechenden Druck liegt. Auf das Zuschaltventil 531p kann durchaus auch verzichtet werden. Eine Alternative ist beispielsweise, dass das Gangwählventil 530p' in Sperrstellung gehalten wir, so lange kein Schalten erforderlich ist. Dies hat den Nachteil der ständigen Bestromung des Solenoids des Ventils 530p'. Ferner könnten die Ventile 530p' und 528p sich festsetzen.

Beispielsweise im Hinblick auf den Fall, dass mit dem Aufstauventil nicht der gewünschte, nämlich nur ein zu hoher Druck für den Getriebeaktuator bereitgestellt werden kann, z.B. weil der benötigte Kupplungsbetätigungsdruck zu hoch liegt, kann anstelle des Zuschaltventils 531p auch ein weiteres Druckregelventil 531p' verwendet werden, das den benötigten Schaltdruck einstellt und in Phasen ohne Getriebebetätigung den Getriebebetätigungsabschnitt 160p' vom Betriebsdruck abkoppelt. Diese alternative Ausgestaltung der hydraulischen Schaltung ist in Fig. 1 zusätzlich angedeutet.

Die Funktionsweise der hydraulischen Schaltung der Fig. 1 kann beispielsweise wie folgt sein. Kommt vom Steuergerät ein Schalt-Befehl, so wird das Aufstauventil 162p so weit bestromt, dass der Druck über den dem maximalen Motormoment entsprechenden Druck ansteigt. Dies hat zur Folge, dass das Zuschaltventil 531p auf Durchfluss schaltet. Gleichzeitig mit dem Bestromen des Aufstauventils 162p beim Schaltwunsch wird auch das Gangwählventil 530p' so weit bestromt, dass es in die Sperrstellung (zweite oder mittlere Stellung) fährt. In diesem Zustand liegt am Druckanschluss des Gangwählventils 530p' Druck an. Je nachdem, welcher Gang geschaltet werden soll, wird das Gangwählventil in Stellung 1 oder 3 gefahren, das Schaltventil 528p bestromt oder nicht und das Schaltventil 524p bestromt oder nicht. Hierauf abgestimmt erfolgt die Betätigung der Kupplungsanordnungen vermittels der Regelventile 106 und 108 im Einrück- bzw. Ausrücksinne.

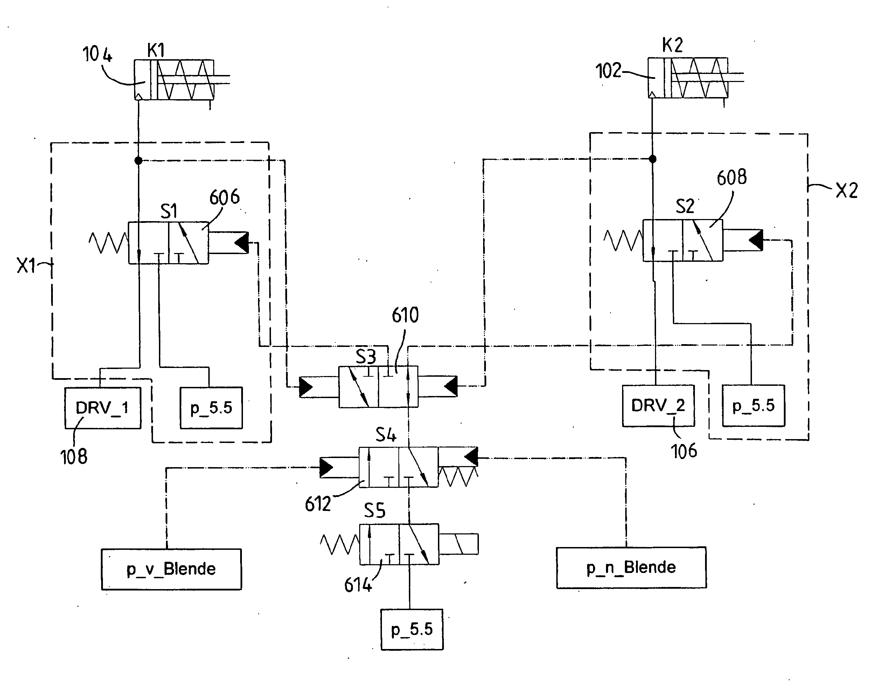

Zur Doppelkupplung 100 bzw. zur Betätigung der Doppelkupplung sollte noch Folgendes ergänzt werden. Bevorzugt handelt es sich bei der Doppelkupplung 100 um eine Doppelkupplung mit zwei Lamellen-Kupplungsanordnungen, die in Fig. 1 und Fig. 4 jeweils durch den hydraulischen Nehmerzylinder 102 bzw. 104 repräsentiert sind, der zur Betätigung der jeweiligen Lamellenkupplungsanordnung im Einrücksinne dient. Es handelt sich also um Kupplungsanordnungen des NORMALERWEISE-OFFEN-Typs. Ohne am Nehmerzylinder anliegenden Hydraulikdruck rücken die Kupplungsanordnungen dementsprechend aus bzw. sind im ausgerückten Zustand. Den beiden hydraulischen Nehmerzylindern 102 und 104 ist jeweils das 3/2-Wege-Druckregelventil 106 bzw. 108 zugeordnet, über das der jeweilige Nehmerzylinder geregelt mit Drucköl bzw. Druck beaufschlagbar ist. Hierzu sind die Druckregelventile eingangsseitig an der Druckölversorgung der Pumpenanordnung 10 bzw. der Druckölpumpe 16 angeschlossen, und zwar eingangsseitig des Aufstauventils 162p.

Die Doppelkupplung 100 wird über einen Kühlölkreislauf 150 mit von der Pumpe 16 über das Aufstauventil 162p und das Volumenstrom-Regelventil 22n bereitgestelltem Kühlöl versorgt. Kühlöl, das durch die Doppelkupplung 100 geflossen ist und dort Wärme aufgenommen hat, wird in das Ölreservoir 26 zurückgeführt. Der Kühlölkreislauf weist stromaufwärts der Doppelkupplung 100 den Ölkühler 152 auf, der beispielsweise einen Wärmeaustausch mit der Umgebungsluft oder mit einem Kühlwasserkreislauf ermöglicht.

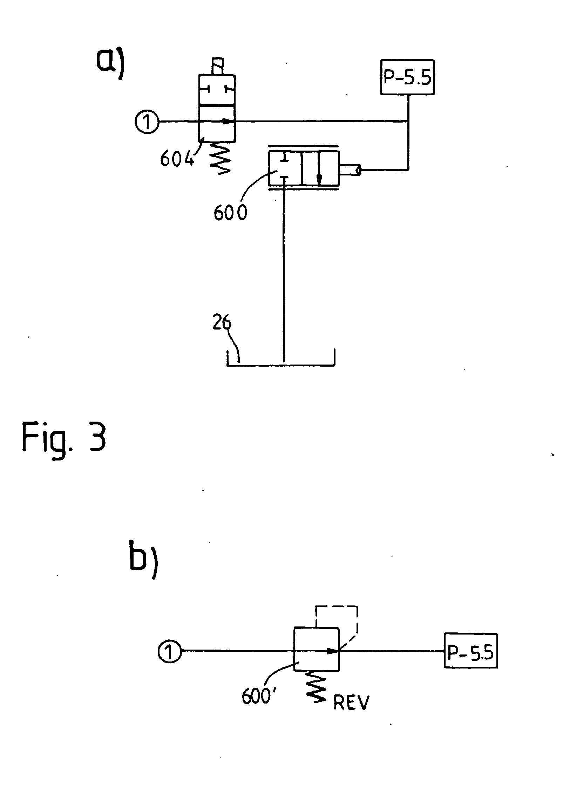

Das Hydrauliksystem der Fig. 1 ist mit einer sich aus Fig. 1 in Verbindung mit den Fig. 3 und 4 ergebenden Druckmedium-Notversorgung für die Doppelkupplung 100 ausgeführt. Grundgedanke der verwirklichten Lösung ist, dass im Falle eines Stromausfalls oder Ausfalls der elektronischen Steuerung die zuletzt aktive Kupplungsanordnung K1 (104) bzw. K2 (102) unabhängig von den Regelventilen 106 und 108 mit einem Konstantdruck beaufschlagt wird. Der Konstantdruck kann - um nur ein Beispiel zu nennen - beispielsweise 5,5 bar betragen und wird beim Ausführungsbeispiel in der Variante nach Fig. 3a über ein Druckreduzierventil 600 bereitgestellt, um das zwischen der Pumpe 16 und dem Aufstauventil 162p angeschlossen ist und den Notbetätigungsdruck bzw. Haltedruck von 5,5 bar geregelt bereitstellt. Bei dem Ventil 600 handelt es sich um ein Ventil mit einem hydraulischen Steuereingang für die Rückkopplung des abgabeseitig herrschenden Hydraulikdrucks. Der Abgabedruck von 5,5 bar ist in den Fig. 3 und 4 auch mit p_5.5 bezeichnet; die entsprechenden Bezeichnungen dienen zur Andeutung von Druckversorgungsverbindungen zwischen verschiedenen Komponenten des Schaltungsteils gemäß Fig. 4 mit dem Druckreduzierventil. Es sei angemerkt, dass der Druck von 5,5 bar möglicherweise für die Ansteuerung von Druckreglern wie in 6 HP-Getriebeautomaten häufig ohnehin darzustellen ist. Insoweit könnte in einer praktischen Umsetzung ein entsprechendes Druckniveau ohnehin schon zur Verfügung stehen. Jedenfalls wird man ein zusätzliches Druckreduzierventil, beispielsweise wie das Ventil 600, vorsehen, nämlich dann, wenn der vom Aufstauventil 162p im nicht bestromten Zustand eingestellte Druck für die Kupplungsanordnung bzw. den kupplungsanordnungsseitigen Hydrauliksystemabschnitt einschließlich der hydraulischen Nehmerzylinder zu hoch ist. Beispielsweise kann die Auslegung des Hydrauliksystems so sein, dass bei nicht bestromtem Aufstauventil 162p dieses bei laufender Pumpe 116 einen Druck von 20 bar einstellt.

Es sei angemerkt, dass die Erläuterung der Erfindung anhand des Ausführungsbeispiels der Fig. 1 bis 4 davon ausgeht, dass das Aufstauventil 162p ein Öffnerventil ist, das bei Bestromung aufmacht und damit den eingangsseitig von ihm herrschenden Druck reduziert. Auch im Aufstaufall, also bei weniger starker Bestromung bzw. fehlender Bestromung des Solenoids des Aufstauventils 162p, fließt doch stets im Wesentlichen der gesamte von der Pumpe 16 geförderte Ölstrom durch das Aufstauventil 162p in Richtung zum Volumenstrom-Regelventil 22n. Der Öffnungszustand des Aufstauventils bestimmt also primär nur das eingangsseitig der Regelventile 106 und 108 bzw. des Zuschaltventils 531p herrschende Druckniveau, weniger aber oder gar nicht den Ölstrom durch das Aufstauventil 162p.

Im normalen Fahrbetrieb sind zwei Schieberventile S1 (606) und S2 (608), die zwischen das Druckregelventil 108 und den hydraulischen Nehmerzylinder 104 bzw. zwischen das Druckregelventil 106 und den hydraulischen Nehmerzylinder 102 geschaltet sind, so geschaltet, dass die Nehmerzylinder mit den von den Druckregelventilen 108 und 106 bereitgestellten Hydraulikdrücken beaufschlagt werden. Hierzu werden die Schieberventile S1 (606) und S2 (608) durch eine auf einen jeweiligen Ventilschieber wirkende Rückstellfeder in einem Schaltzustand gehalten, indem der Druck von den Regelventilen 108 und 106 zum jeweiligen hydraulischen Nehmerzylinder 104 bzw. 102 durchgeschaltet ist, der vom Druckreduzierventil bereitgestellte Druck (beispielsweise 5,5 bar) hingegen über das Schieberventil S1 bzw. S2 nicht zum hydraulischen Nehmerzylinder 104 durchgelassen wird.

Um bei einem Stromausfalls oder einem Versagen der elektronischen Schaltung selbsttätig auf den vom Druckreduzierventil 600 bereitgestellten Konstantdruck umschalten zu können, ist ein elektrisches Ventil S5 (614) vorgesehen, das im normalen Fahrbetrieb bestromt wird und im bestromten Zustand einen als Steuerdruck dienenden Druck, beispielsweise den Konstantdruck, nicht durchlässt, im Falle der Nichtbestromung aber diesen Druck als Steuerdruck in Richtung zu einem jeweiligen Steuereingang des Schieberventils S1 bzw. S2 durchlässt. Liegt dieser Druck an dem jeweiligen Steuereingang an, so wird der Schieber des betreffenden Ventils gegen die Rückstellkraft der Rückstellfeder in eine Stellung verschoben, dass die Verbindung zwischen dem betreffenden Druckregelventil 108 bzw. 106 einerseits und dem hydraulischen Nehmerzylinder 104 bzw. 102 andererseits unterbrochen und stattdessen der Konstantdruck (beispielsweise 5,5 bar) über das Schieberventil S1 bzw. S2 zum betreffenden hydraulischen Nehmerzylinder durchgelassen wird.

Beim gezeigten Ausführungsbeispiel verläuft die Verbindung zwischen dem elektrischen Schaltventil S5 und dem Schieberventil S1 bzw. S2 allerdings über zwei weitere hydraulisch ansteuerbare Schaltventile S4 (612) und S3 (610), um die Umschaltung des Schaltventils S1 bzw. S2 im Notversorgungsfall von zwei weiteren Bedingungen abhängig zu machen.

Der Ventilschieber des Schieberventils S3 (610) wird von beiden Seiten mit den auf die hydraulischen Nehmerzylinder wirkenden Betätigungsdrücken beaufschlagt und schaltet im Notversorgungsfall den vom Druckreduzierventil 600 bereitgestellten Konstantdruck entweder in Richtung zum Schieberventil S1, wenn zuvor auf den hydraulischen Zylinder 104 der größere Betätigungsdruck wirkte, also die Kupplungsanordnung K1 (104) alleine oder stärker eingerückt war, oder in Richtung zum Schieberventil S2, wenn zuvor der auf den hydraulischen Nehmerzylinder 102 wirkende Hydraulikdruck größer und dementsprechend die Kupplungsanordnung K2 (102) alleine oder stärker eingerückt war. Es wird so gewährleistet, dass die vor Eintreten des Fehlerfalls (insbesondere Stromausfalls) zuletzt aktive Kupplungsanordnung über das Schieberventil S1 bzw. Schieberventil S2 auf den Konstantdruck geschaltet wird. Somit kann im zuletzt aktuellen Gang sicher bis zum ersten Halten weiter gefahren werden.

Es wurde noch nicht auf die Funktion des Schieberventils S4 (612) eingegangen. Das Schieberventil S4 wird von beiden Seiten mit einem vor und nach einer Blende 602 in der Kühlölversorgungsleitung in Richtung zur Doppelkupplung abgenommenen Hydraulikdruck, also mit einem an dieser Blende abfallenden Differenzdruck, beaufschlagt. Dieser Differenzdruck ist ein Maß für den Kühlölvolumenstrom in Richtung zur Doppelkupplung 100. Der Kühlölvolumenstrom repräsentiert wiederum die momentane Betriebsdrehzahl der Pumpe 16 und damit die Drehzahl der Antriebseinheit (des Verbrennungsmotors) 12. Im Falle einer Konstantpumpe ist der Ölvolumenstrom proportional zur Motordrehzahl.

Die Blende und der Schieber S4 sind beim gezeigten Ausführungsbeispiel nun so ausgelegt, dass der Unterschied zwischen dem Druck vor der Blende (Druck p_v_Blende) und nach der Blende (Druck p_n_Blende) das Schieberventil S4 unterhalb einer Schwellenmotordrehzahl, beispielsweise der Leerlaufdrehzahl, so schaltet, dass der als Steuerdruck dienende Konstantdruck vom Schaltventil S5 nicht zum Schieberventil S3 und damit zu keinem der beiden Schieberventile S1 und S2 durchgelassen wird.

Fährt das Kraftfahrzeug mit einer Motordrehzahl größer als die Schwellendrehzahl, also beispielsweise größer als die Leerlaufdrehzahl, so ist das Schieberventil S4 (612) offen, d.h. im Notversorgungsfall wird der vom Schieberventil S5 durchgelassene Steuerdruck durch das Schieberventil S3 entweder an das Schieberventil S1 oder an das Schieberventil S2 durchgelassen. Fällt die Motordrehzahl unter diesen Schwellenwert und damit der Differenzdruck an der Blende entsprechend ab, so schließt das Schieberventil S4, d.h. der vom Schaltventil S5 abgegebene Konstantdruck wird wieder abgeschaltet und der zuvor mit dem Konstantdruck beaufschlagte hydraulische Nehmerzylinder 104 bzw. 102 wird über das stromlose Druckregelventil 108 bzw. 106 entleert. Die Druckregelventile 108 und 106 sind hierzu so ausgelegt und angeordnet, dass sie bei Stromausfall ihren Arbeitsanschluss mit dem Tankanschluss verbinden. Dadurch baut sich der Druck im betreffenden hydraulischen Nehmerzylinder in Richtung zum Tank ab und es wird der Kraftschluss an der betreffenden Kupplungsanordnung unterbrochen. Durch diese Maßnahme wird zuverlässig ein Abwürgen des Motors bei Erreichen der Schwellen- oder Grenzdrehzahl (etwa der Leerlaufdrehzahl) verhindert.

Die vorgeschlagene Auslegung der Druckmedium-Notversorgung ermöglicht so einerseits einen Notfahrbetrieb, aber ohne dass die Gefahr besteht, dass durch die geschlossene Kupplung der Verbrennungsmotor abgewürgt wird, was dazu führen würde, dass in der Regel vorgesehene Lenk- und Bremsunterstützung des Kraftfahrzeugs ausfällt, was überaus sicherheitskritisch wäre. Es sei angemerkt, dass anstelle der Leerlaufdrehzahl auch eine andere kritische Motordrehzahl als Schwellen- oder Grenzdrehzahl vorgesehen sein kann, deren Unterschreitung zum Öffnen der betreffenden Kupplungsanordnung führt, um den Motor nicht abzuwürgen und dadurch die Nebenaggregate nicht zum Stillstand zu bringen oder um andere Betriebs- und Fahrzeugzustände zu vermeiden.

Um bei erneuter Erhöhung der Motordrehzahl über den Grenzdrehzahlwert ein Schließen der anderen (zuletzt nicht aktiven) Kupplungsanordnung zu verhindern, kann das Schieberventil S3 eine Rastierung aufweisen, so dass dieser in der zuletzt eingenommenen Stellung bleibt und den Konstantdruck nur in Richtung des Schieberventils S1 bzw. S2 der zuletzt aktiven Kupplungsanordnung schicken kann.

Es sei angemerkt, dass die Verschalung des Druckreduzierventils 600 der Fig. 3a mit dem in Fig. 1 gezeigten Teil des Hydrauliksystems so wie vorstehend beschrieben dazu führt, dass das Druckreduzierventil stets aktiv ist, auch im normalen Fahrbetrieb. Es ist deswegen gegenüber der vorangehenden Beschreibung bevorzugt, dass das Druckreduzierventil 600 nur im Notversorgungsfall, also bei einem Fehler oder Stromausfall aktiv ist, den durch das Aufstauventil 162p aufgestauten Hydraulikdruck auf den Konstantdruck zu reduzieren. Eine Möglichkeit, dies zu erreichen, ist in Fig. 3 gezeigt. Zwischen dem Anschluss eingangsseitig des Aufstauentils 162p ist noch ein weiteres elektrisches Schaltventil 604 geschaltet, das im normalen Fahrbetrieb durch Bestromung entgegen der Rückstellkraft einer auf einen Ventilschieber wirkenden Rückstellfeder in einem Unterbrechungszustand gehalten wird, indem der eingangsseitig des Aufstauventils 162p herrschende Druck nicht an das Druckreduzierventil durchgelassen wird und dieses dementsprechend nicht aktiv ist. Im Notversorgungsfall, wenn das Ventil 604 nicht bestromt wird, öffnet dieses die Verbindung zum Druckreduzierventil 600, so dass dieses seine Druckreduzierungsfunktion ausübt.

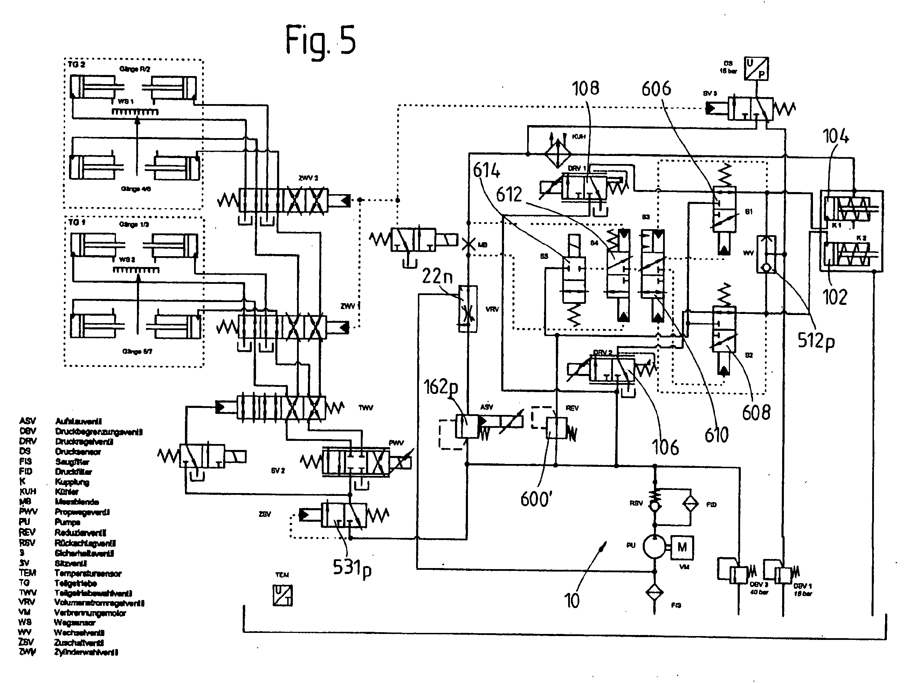

Gegenüber der Ausführungsvariante gemäß Teilfigur 3a in Verbindung mit Fig. 1 und Fig. 4 ist allerdings eine andere Ausführungsvariante bevorzugt, die sich aus Teilfigur 3b in Verbindung mit Fig. 1 und Fig. 4 ergibt. Diese entspricht im Wesentlichen dem unten detaillierter beschriebenen Ausführungsbeispiel gemäß Fig. 5. Durch das in Teilfigur 3b gezeigte Druckreduzierventil 600' und die Art und Weise seiner Verschaltung mit den übrigen Komponenten des Hydrauliksystems ist erreicht, dass das Druckreduzierventil 600' stets aktiv sein kann, ohne dass der eingangsseitig des Aufstauventils 162p herrschende Druck auf den Konstantdruck abgesenkt wird. Damit bleibt im Prinzip die Betätigung des Getriebes mit größeren Drücken als der Konstantdruck weiter möglich, im normalen Fahrbetrieb wie auch im Notversorgungsfall, und die Kupplungsanordnungen können im normalen Fahrbetrieb auch mit größeren Drücken als der Konstantdruck betätigt werden. Die Einsparung eines zusätzlichen Ventils wie des Ventils 604 ist ohne Frage auch ein Vorteil.

Mit der beschriebenen bevorzugten Weiterbildung des Hydrauliksystems gemäß vorangehender Beschreibung sind im normalen Fahrbetrieb auch Kupplungsbetätigungsdrücke größer als 5,5 bar möglich, je nach Auslegung des Hydrauliksystems und der hydraulischen Nehmerzylinder bzw. der Kuppungsanordnungen. Beispielsweise kann für Volllast ein Kupplungsbetätigungsdruck größer als 5,5 bar vorgesehen sein. In diesem Falle müsste im Notbetätigungsfall das Motormoment auf einen Wert entsprechend dem Kupplungsbetätigungs-Konstantdruck an den hydraulischen Nehmerzylindern, im Beispielsfall 5,5 bar, reduziert werden. Tritt der Notversorgungsfall während einer Überschneidungsschaltung in der Doppelkupplung auf, so spielt es keine Rolle, welche der beiden Kupplungsanordnungen durch den Konstantdruck geschaltet wird, da in diesem Zustand auch auf beiden Teilgetrieben TG1 und TG2 jeweils ein Gang eingelegt ist.

Das Hydrauliksystem der Fig. 5 entspricht im Wesentlichen dem sich aus den Fig. 1, 3 und 4 ergebenen Hydrauliksystem, und zwar der Variante gemäß Fig. 3b. Das mit 606 bezeichnete Ventil S1, das mit 608 bezeichnete Ventil S2, das mit 610 bezeichnete Ventil S3, das mit 612 bezeichnete Ventil S4 und das mit 614 bezeichnete Ventil S5 sind direkt in den Schaltplan eingezeichnet in Zuordnung zu den Druckregelventilen 106 und 108, dem Umschaltventil 512p und den hydraulischen Nehmerzylinder 102 und 104. Anstelle des Druckreduzierventils 600 gemäß Fig. 3a ist das Druckreduzierventil 600' vorgesehen und durch ein entsprechendes Schaltsymbol repräsentiert eingezeichnet. Es sorgt für den benötigten Konstantdruck eingangsseitig der Ventile 614, 608 und 606, ohne dass der eingangsseitig der Druckregelventile 106 und 108 und des Zuschaltventils 531 p, also der eingangsseitig des Aufstauventils 162p herrschende Druck ebenfalls auf diesen Konstantdruck abfällt, so dass es des Schaltventils 604 gemäß Fig. 3a nicht bedarf.

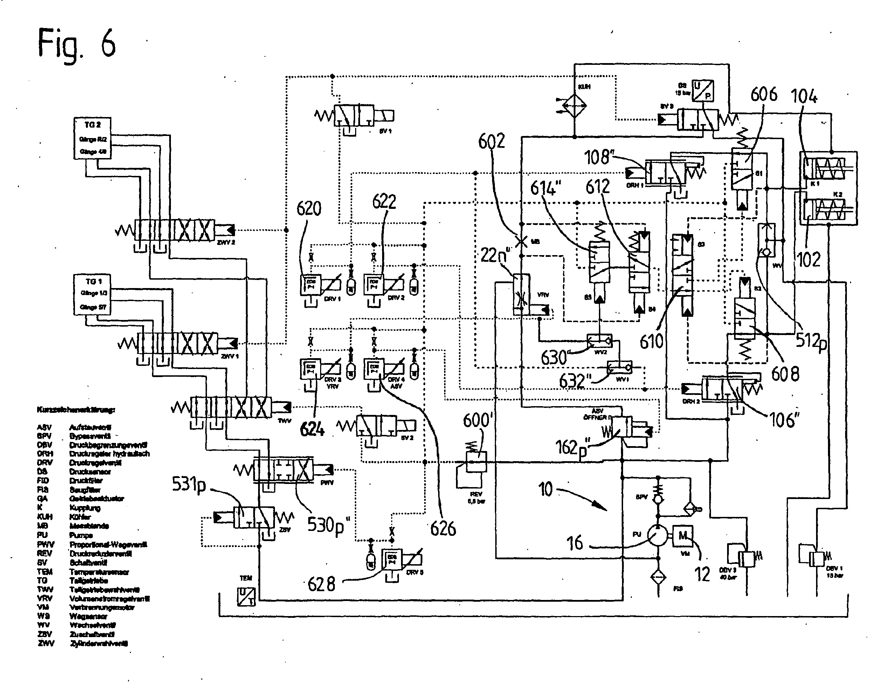

Fig. 6 unterscheidet sich vom Ausführungsbeispiel der Fig. 5 dadurch, dass die nun mit 108" und 106" bezeichneten Druckregelventile, das nun mit 162p" bezeichnete Aufstauventil, das nun mit 22n" bezeichnete Volumenstromregelventil und das nun mit 530" bezeichnete Gangwählventil 530p" als vorgesteuerte Ventile ausgeführt sind. Dies bedeutet, dass der jeweilige Ventilschieber nicht mehr von einer Magnetkraft betätigt wird, sondern über einen Steuerdruck. Der jeweilige Steuerdruck kann über ein zugeordnetes Vorsteuerventil 620, 622, 624, 626 bzw. 628 eingestellt werden. Diese Vorsteuerventile können beispielsweise kostengünstig als Sitzventile ausgeführt sein. Auch diese Vorsteuerventile werden über Magnete angesteuert, diese können aber bedeutend kleiner sein als bei einem direkt gesteuerten Ventil. Die Ausführung der Vorsteuerventile als Sitzventile ist auch insoweit vorteilhaft, als dass diese weniger schmutzempfindlich sind als Schieberventile.

Vorteilhaft an der vorgesteuerten Ventilanordnung ist insbesondere, dass über den Vorsteuerdruck leichter eine höhere Kraft auf den Nachfolgeschieber erzeugt werden kann als mit einem Magneten, der direkt den Schieber betätigt. Die Vorsteuerventile 620 bis 628 benötigen einen geringeren Druck als den Systemdruck, z.B. den auch für die Druckmedium-Notversorgung verwendeten Konstantdruck von beispielsweise 5,5 bar. Dieser Druck wird durch das Reduzierventil 600' eingestellt.

Angemerkt sei, dass es umgekehrt durchaus auch in Betracht kommt, das Zuschaltventil 531p nicht als hydraulisch betätigtes, sondern als elektrisch betätigtes Ventil auszuführen, in Abweichung von den Darstellung in Fig. 1, 5 und 6.

Das Ausführungsbeispiel der Fig. 6 unterscheidet sich noch in einem anderen Punkt vom Ausführungsbeispiel der Fig. 1 bis 4 und vom Ausführungsbeispiel der Fig. 5. Das nun mit 614" bezeichnete Schaltventil S5 ist nun nicht als elektrisch angesteuertes, sondern als hydraulisch angesteuertes Ventil ausgeführt. Dem Schaltventil S5 sind zwei Wechselventile WV1 und WV2 zugeordnet, die auch mit 630" bzw. 632" bezeichnet sind. Das Wechselventil WV1 bzw. 632" lässt jeweils den größeren der den Druckregelventilen 106" und 108" zugeführten Vorsteuerdrücken zum Wechselventil WV2 bzw. 630" durch. Dieses lässt den größten von dem vom Wechselventil WV1 zugeführten Vorsteuerdruck und dem dem Volumenstromregelventil 22n" zugeführten Vorsteuerdruck zum Steuereingang des Schaltventils S4 bzw. 614" durch. Im normalen Fahrbetrieb, wenn die elektrische Energieversorgung gewährleistet ist und die Elektronik ordnungsgemäß funktioniert, liegt so stets ein hinreichend großer Ansteuerdruck am Steuereingang des Schaltventils S5 an, so dass dessen Ventilschieber gegen die Rückstellkraft einer Rückstellfeder in der Zufuhr des Konstantdrucks von beispielsweise 5,5 bar zum Schieberventil S4 bzw. 612 unterbrochen ist. Dies gilt auch bei stehendem Fahrzeug bzw. bei geöffneten Kupplungsanordnungen, da in diesem Fall der Vorsteuerdruck für das Volumenstromregelventil noch auf zum Halten des Ventils 55 hinreichendem Druckniveau sein kann. Fällt hingegen das System aus, so fallen auch die Vorsteuerdrücke ab und damit der am Steuereingang des Ventils 614" anliegende Druck, so dass die Rückstellfeder den Ventilschieber des Ventils 614" in die Durchlassstellung verschiebt, so dass der Konstantdruck zum Schieberventil S4 durchgelassen wird. Es wird so die gleiche Funktion wie durch das elektrisch angesteuerte Ventil S5 bzw. 614 gemäß Fig. 4 bzw. 5 erreicht.

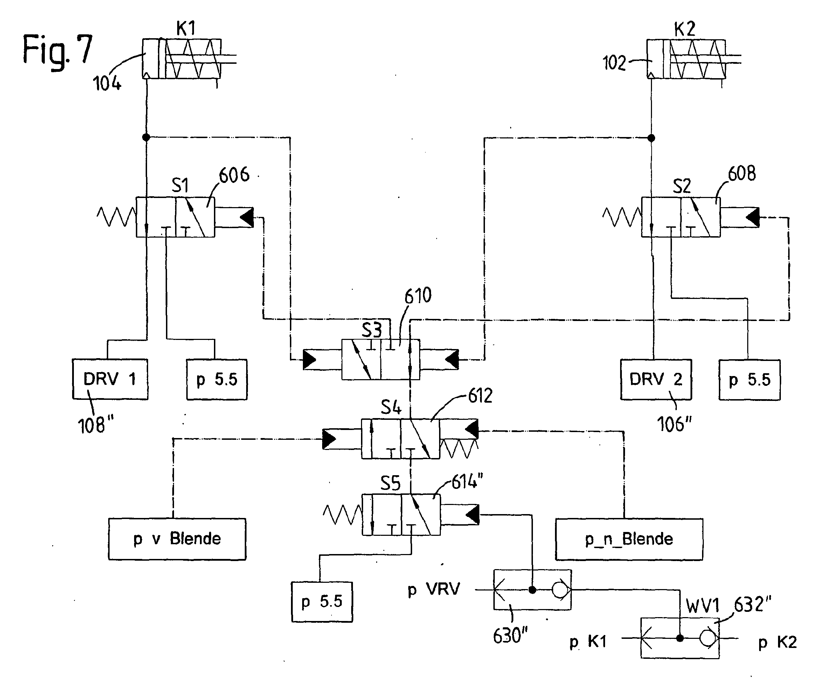

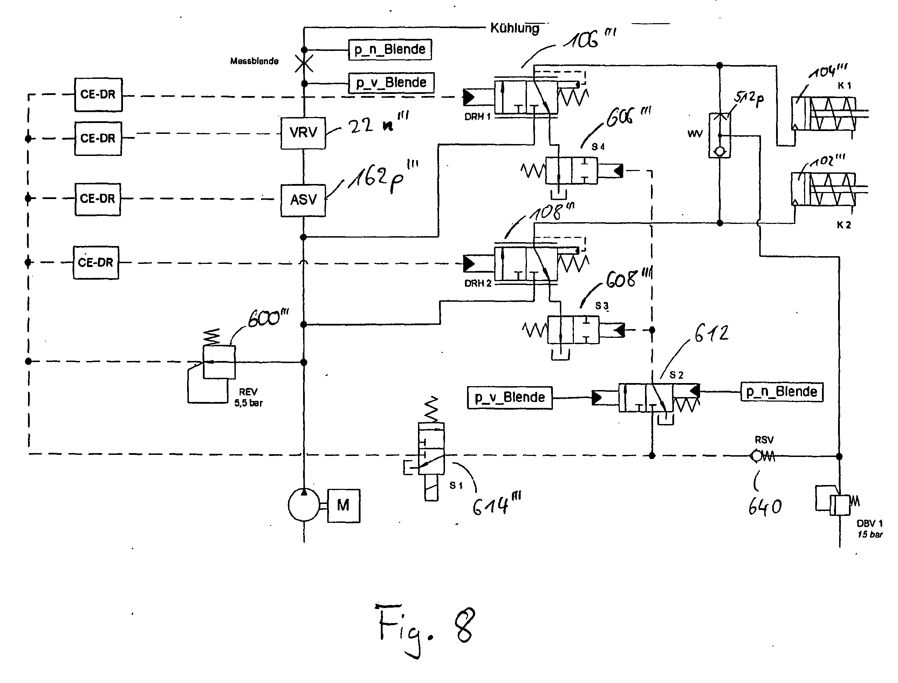

Fig.8 zeigt eine weitere alternative des erfindungsgemäßen Sicherheitskonzeptes. Hierzu dient das elektrisch ansteuerbare Ventil 614''' gleichzeitig als Umschaltventil, welches bei Stromausfall den durch das Druckreduzierventil 600''' reduzierten Öldruck über das Rückschlagventil 640 und das Umschaltventil 512p direkt zu der Kupplungsanordnung bringt, welche zuletzt mit höherem Druck beaufschlagt war. Durch die beiden hydraulisch betätigten Umschaltventile 606''' und 608''' wird hierzu der jeweilige Tankanschluss der beiden Druck-Steuer/Regelventile 106''',108''' gesperrt. Somit bleibt im Störungsfall der zuletzt anliegende Kupplungsdruck zunächst erhalten, da die beiden Druck-Steuer/Regelventile 106''',108''' zwar öffnen und die Tankleitung freigeben, aber durch die nachgeschalteten Umschaltventile 606''' und 608''' der Druck nicht in den Tank abfließen kann. Reduziert sich in Folge von Leckageverlusten an den Drehdurchführungsdichtungen der Kupplungsanordnung der Kupplungsdruck unter den vom Druckreduzierventil 600''' eingestellten Druck, öffnet das Rückschlagventil 640 und der reduzierte Druck liegt an der entsprechenden Kupplung an.
Das Ventil 612 verhindert wie in Fig. 4 bis Fig. 7 das Abwürgen des Motors. Bei zu geringem Differenzdruck an der Messblende sperrt das Ventil 612 und die beiden Umschaltventile 606''' und 608''' bleiben geöffnet, sodass die Tankleitung im Störungsfall zu den Kupplungen freigegeben ist. Eine Erhöhung der Motordrehzahl kann bei entsprechender Auslegung des Ventils 612 dazu führen, dass das Ventil infolge ausreichenden Differenzdrucks an der Messblende wieder öffnet, dadurch die Tankanschlüsse der beiden Druck-Steuer/Regelventile 106''',108''' wieder geschlossen werden und somit ein Wiederanfahren möglich wird.

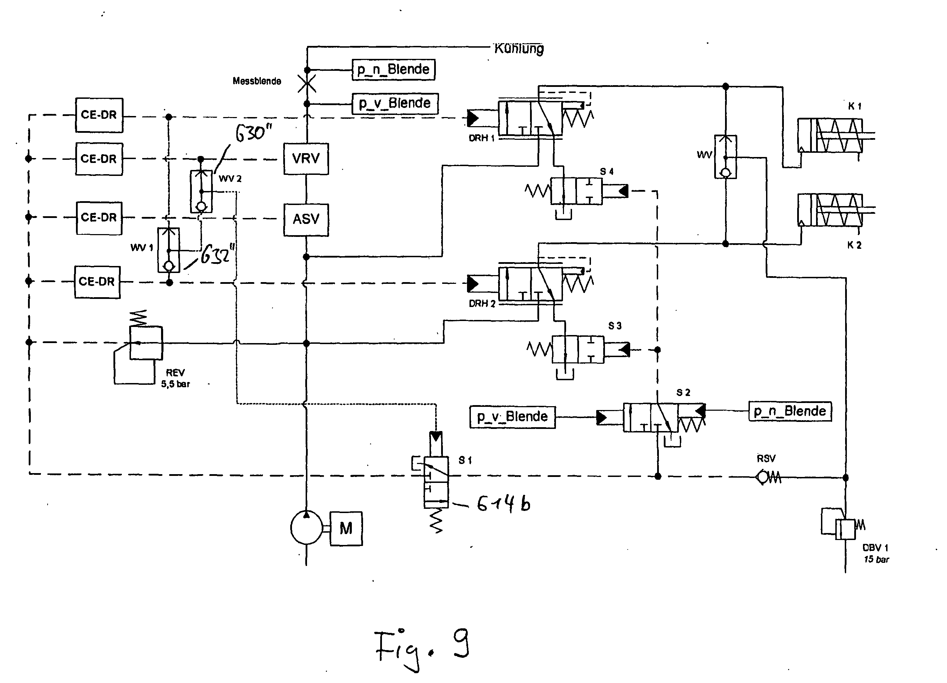

In Fig.9 ist gegenüber Fig.8 anstelle eines elektrisch angesteuerten Ventils das hydraulisch angesteuerte Ventil 614 b angeordnet. Die Ansteuerung des hydraulisch angesteuerte Ventil 614 b erfolgt wie in Fig. 6 vermittels der beiden Wechselventile 630" und 632". Das hydraulisch angesteuerte Ventil 614 b dient weiterhin wie in Fig.8 als Umschaltventil, welches bei Stromausfall der CE-Druckregler öffnet und den reduzierten Druck zu den Kupplungsanordnungen freischaltet.

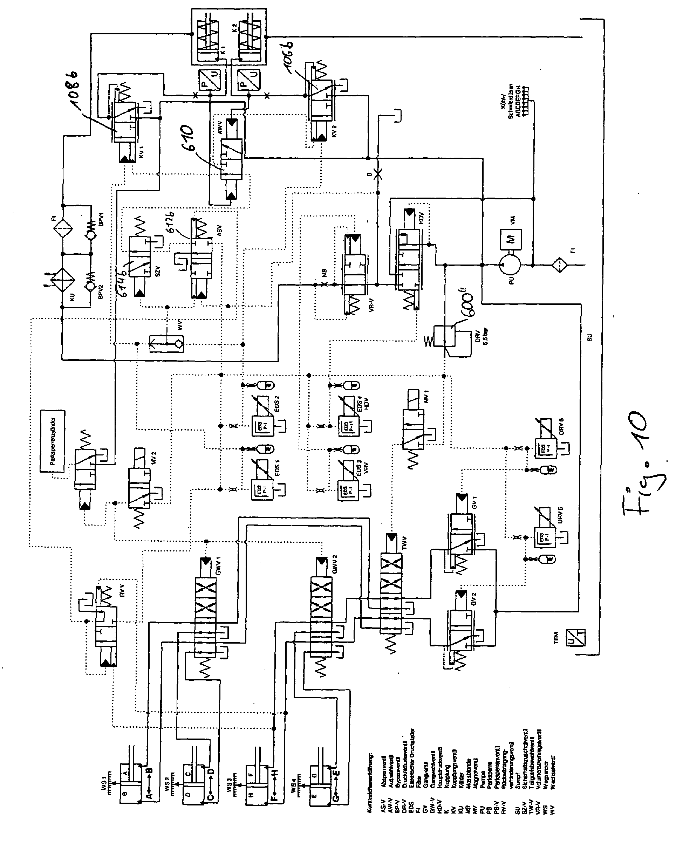

Fig.10 unterscheidet sich von den Hydrauliksystemen gemäß Fig.5,6,8,9 dadurch, das im Notfahrbetrieb des Fahrzeugs die beiden Druck-Steuer/Regelventile 106b,108b nicht gesperrt bzw. umgangen werden, sondern dass die beiden Druck-Steuer/Regelventile 106b,108b einen weiteren Steueranschluss für den durch das Druckreduzierventil 600" bereitgestellten Öldruck aufweisen, an welchem im Notfahrbetrieb der reduzierte Druck anliegt und einen definierten Kupplungsdruck, welcher nicht regelbar ist, einstellt.
Das hydraulisch angesteuerte Ventil 614b, an welchem im normalen Fahrbetrieb der größere der beiden Vorsteuerdrücke für die beiden Druck-Steuer/Regelventile 106b,108b anliegt, und welches dadurch gesperrt ist, öffnet bei Stromausfall an den Druckstellern automatisch und legt den reduzierten Druck vermittels des Auswahlventils 610 an das Druck-Steuer/Regelventile 106b,108b an, welchem zuletzt der höhere Druck angelegen hat, welcher das Auswahlventils 610 selbsttätig entsprechend verstellt hat. Dem hydraulisch angesteuerte Ventil 614b ist noch das Ventil 612b vorgeschaltet, welches bei anliegendem Vorsteuerdruck gegen die Rückstellkraft der Feder geöffnet wird. Der vor der Messblende B anliegende Druck liegt am Ventil 612b in Öffnungsrichtung an und dient dazu, das Ventil 612b bei Ausfall der Vorsteuerdrücke in geöffneter Stellung zu halten. Bei zu niedriger Drehzahl und dem daraus resultierenden niedrigen Druck wird das Ventil 612b durch die Rückstellkraft der Feder geschlossen, sodass der anliegende Druck an den Kupplungsanordnungen abgebaut wird ,wodurch der Kraftschluss aufgehoben wird und ein Abwürgen des Motors verhindert wird. Zusätzlich zum Druckanschluss für den Messblendendruck liegt noch der durch das Wechselventil WV ausgewählte Druck am Ventil 612b an. Weiterhin liegt am Ventil 612b noch ein vom RVV schaltbarer Druck in Sperrstellung an, welcher beim Einlegen des Rückwärtsganges das Ventil 612b sperrt. Hierzu öffnet das Ventil RVV beim Einlegen des Rückwärtsganges und lässt den reduzierten Druck von 5,5 bar auf den Federraum des Ventils 612b wirken wodurch dieses schließt und damit im Rückwärtsfahrbetrieb die Notfahrfunktion verhindert wird.

## Patentansprüche

1. Kraftfahrzeug-Antriebsstrang, umfassend eine Antriebseinheit (12), ein Getriebe und ein Kupplungssystem mit einem Druckmediumsystem und mit einer zwischen der Antriebseinheit und dem Getriebe angeordneten Kupplungseinrichtung (100) zur Momentenübertragung zwischen der Antriebseinheit und dem Getriebe, wobei die Kupplungseinrichtung wenigstens eine unter Vermittlung von Druckmedium betätigbare Kupplungsanordnung (102, 104) aufweist, wobei über das Druckmediumsystem auf Grundlage einer zumindest der Kupplungseinrichtung zugeordneten Pumpenanordnung (10) das Druckmedium für die Betätigung der Kupplungsanordnung (102, 104) bereitstellbar ist unter Vermittlung wenigstens eines das Druckmedium auf einem Betätigungsdruck bereitstellenden, elektrisch ansteuerbaren Druck-Steuer/Regelventils (106,108) des Druckmediumsystems, und wobei das Druckmediumsystem eine Druckmedium-Notversorgung aufweist (600, 614, 606, 608; 600',614", 606, 608) auf deren Grundlage zumindest für einen zumindest einen Notfahrbetrieb des Kraftfahrzeugs ermöglichenden Notbetriebszeitraum unabhängig von einer elektrischen Energieversorgung oder/und unabhängig von ordnungsgemäßer Funktion einer elektronischen Steuer/Regelschaltung Druckmedium für die Betätigung der Kupplungsanordnung (102, 104) oder zumindest zum Halten der Kupplungsanordnung (102, 104) in einem zumindest teilweise eingekuppelten Zustand bereitstellbar ist,
**dadurch gekennzeichnet,**
**dass** die Kupplungseinrichtung (100) als Mehrfach-Kupplungseinrichtung, insbesondere Doppel-Kupplungseinrichtung (100), ausgeführt ist und eine erste Kupplungsanordnung (102), der wenigstens ein erster Betätigungszylinder (102) zugeordnet ist, und eine zweite Kupplungsanordnung (104), der wenigstens ein zweiter Betätigungszylinder (104) zugeordnet ist, aufweist,
wobei den beiden Zylindern unabhängig voneinander von der Pumpenanordnung (20) bereitgestelltes Medium als Druckmedium zuführbar ist, und **dass** das Druckmediumsystem für zumindest einen Notbetriebszeitraum dafür ausgelegt ist, demjenigen Betätigungszylinder von der Druckmedium-Notversorgung (600, 614, 606, 608; 600', 614", 606, 608) bereitgestelltes Druckmedium zuzuführen, der der momentan alleine oder stärker eingekuppelten Kupplungsanordnung zugeordnet ist.

2. Antriebsstrang nach Anspruch 1, **dadurch gekennzeichnet, dass** die Kupplungseinrichtung vom NORMALERWEISE-OFFEN-Typ ist, dass im Falle eines Ausfalls der elektrischen Energie das Druck-Steuer/Regel-Ventil (106, 108) keinen hinreichenden Betätigungsdruck für die Betätigung der Kupplungsanordnung oder zum Halten der Kupplungsanordnung in dem zumindest teilweise eingekuppelten Zustand bereitstellt und dass auf Grundlage der Druckmedium-Notversorgung (600, 614, 606, 608; 600', 614", 606, 608) im Falle des Ausfalls der elektrischen Energie oder/und im Falle einer Fehlfunktion der elektronischen Steuer/Regelschaltung Druckmedium auf einem zum zumindest teilweisen Einkuppeln der Kupplungsanordnung (102, 104) oder zumindest zum Halten der Kupplungsanordnung (102, 104) in einem zumindest teilweise eingekuppelten Zustand ausreichenden Druckniveau bereitstellbar ist.

3. Antriebsstrang nach Anspruch 1 oder 2, **dadurch gekennzeichnet, dass** die Kupplungseinrichtung für einen Betrieb unter Einwirkung eines Betriebsmediums vorgesehen ist, wobei der Kupplungseinrichtung (100) auf Grundlage der Pumpenanordnung (10) Betriebsmedium für den Betrieb unter Einwirkung des Betriebsmediums zuführbar ist.

4. Antriebsstrang nach einem der Ansprüche 1 bis 3, **dadurch gekennzeichnet, dass** das Getriebe mittels einer zugeordneten Aktuatorik (160p') unter Vermittlung von Druckmedium betätigbar ist, wobei das Druckmedium für die Betätigung des Getriebes vorzugsweise auf Grundlage der auch dem Getriebe zugeordneten Pumpenanordnung (10) bereitstellbar ist.

5. Antriebsstrang nach einem der Ansprüche 1 bis 4, **dadurch gekennzeichnet, dass** die Druckmedium-Notversorgung das Druckmedium auf Grundlage von von der Pumpenanordnung (10) bereitgestelltem Druckmedium bereitstellt.

6. Antriebsstrang nach Anspruch 5, **dadurch gekennzeichnet, dass** die Pumpenanordnung (10) wenigstens eine durch die Antriebseinheit (12) antreibbare Pumpe (16) aufweist, auf deren Grundlage das Druckmedium auf dem einem/dem zum zumindest teilweisen Einkuppeln der Kupplungsanordnung (102, 104) oder zumindest zum Halten der Kupplungsanordnung (102, 104) in einem zumindest teilweise eingekuppelten Zustand ausreichenden Druckniveau sowie vorzugsweise auf dem Betätigungsdruck bereitstellbar ist.

7. Antriebsstrang nach Anspruch 5 oder 6, **dadurch gekennzeichnet, dass** die Druckmedium-Notversorgung wenigstens eine Druckreduzier-Einrichtung, vorzugsweise wenigstens ein Druckreduzierventil (600, 600') aufweist, durch die ein auf einer Abgabeseite der Pumpenanordnung bzw. der wenigstens einen Pumpe (10) im durch die Antriebseinheit angetriebenen Zustand herrschendes Druckniveau auf ein/das zum zumindest teilweisen Einkuppeln der Kupplungsanordnung oder zumindest zum Halten der Kupplungsanordnung in einem zumindest teilweise eingekuppelten Zustand ausreichende, auf die Druckauslegung eines kupplungseinrichtungsseitigen Druckmediumsystemabschnitt oder/und wenigstens eines Betätigungszylinders (104, 106) der Kupplungssystems abgestimmtes Druckniveau reduzierbar ist.

8. Antriebsstrang nach einem der Ansprüche 1 bis 7, **dadurch gekennzeichnet, dass** das Druckmediumsystem dafür ausgelegt ist, auf einen Ausfall der elektrischen Energieversorgung anzusprechen und in Reaktion auf einen Ausfall der elektrischen Energieversorgung umzuschalten von einem ersten Druckmediumversorgungszustand, in dem das Druck-Steuer/Regelventil (106, 108) das Druckmedium bereitstellt bzw. dessen Betätigungsdruck einstellt, in einen zweiten Druckmediumversorgungszustand, in dem die Druckmedium-Notversorgung (600, 614, 606, 608; 600', 614", 606, 608) das Druckmedium bereitstellt.

9. Antriebsstrang nach Anspruch 8, **dadurch gekennzeichnet, dass** wenigstens ein Umschaltventil (606, 608) in einem ersten Schaltzustand, der dem ersten Druckmediumversorgungszustand entspricht, eine Druckmediumverbindung zwischen der Druck-Steuer/Regelventil (108, 106) und einem/dem Betätigungszylinder (102, 104) der Kupplungseinrichtung freigibt und eine zum Betätigungszylinder führende Druckmediumverbindung der Druckmedium-Notversorgung unterbricht und in einem zweiten Schaltzustand, der dem zweiten Druckmediumversorgungszustand entspricht, die Druckmediumverbindung zwischen dem Druck-Steuer/Regelventil und dem Betätigungszylinder der Kupplungseinrichtung unterbricht und die zum Betätigungszylinder führende Druckmediumverbindung der Druckmedium-Notversorgung freigibt.

10. Antriebsstrang nach Anspruch 9, **dadurch gekennzeichnet, dass** das Umschaltventil als elektrisches ansteuerbares Ventil ausgeführt ist und im bestromten Zustand den ersten Schaltzustand und im nicht bestromten Zustand den zweiten Schaltzustand einnimmt.

11. Antriebsstrang nach Anspruch 9, **dadurch gekennzeichnet, dass** das Umschaltventil als ein durch Druckmedium ansteuerbares Ventil (606, 608) ausgeführt ist und im bedruckten Zustand einen vom ersten und zweiten Schaltzustand, vorzugsweise den zweiten Schaltzustand einnimmt, und im nicht bedruckten Zustand den anderen vom ersten und zweiten Schaltzustand, vorzugsweise den ersten Schaltzustand, einnimmt.

12. Antriebsstrang nach Anspruch 11, **dadurch gekennzeichnet, dass** das Druckmediumsystem wenigstens ein elektrisch ansteuerbares Ventil (614) aufweist, das im nicht bestromten Zustand Druckmedium in Richtung zum Umschaltventil (606, 608) freigibt, um dieses vom ersten in den zweiten Schaltzustand umzuschalten bzw. im zweiten Schaltzustand zu halten.

13. Antriebsstrang nach Anspruch 11, **dadurch gekennzeichnet, dass** das Druckmediumsystem wenigstens ein durch Druckmedium ansteuerbares Ventil (614") aufweist, das in einem einen Ausfall der Energieversorgung indizierenden Ventilzustand, vorzugsweise in einem nicht bedrucktem Zustand, Druckmedium in Richtung zum Umschaltventil (606, 608) freigibt, um dieses vom ersten in den zweiten Schaltzustand umzuschalten bzw. im zweiten Schaltzustand zu halten.

14. Antriebsstrang nach Anspruch 13, **dadurch gekennzeichnet, dass** das durch Druckmedium ansteuerbare Ventil (614") an wenigstens einem Steuereingang als Steuerdruck wenigstens einen Vorsteuerdruck empfängt, welcher zur Vorsteuerung wenigstens eines anderen Ventils (22n", 614", 106", 108") dient.

15. Antriebsstrang nach Anspruch 14, **dadurch gekennzeichnet, dass** eine Auswahl-Ventilanordnung (630", 632") den größten von mehreren verschiedenen Vorsteuerdrücken dem Steuereingang zuführt.

16. Antriebsstrang nach einem der Ansprüche 8 bis 15, **dadurch gekennzeichnet, dass** das Druckmediumsystem dafür ausgelegt ist, direkt oder indirekt auf eine momentane Betriebsdrehzahl der vorzugsweise als Brennkraftmaschine ausgeführten Antriebseinheit (12) anzusprechen und in Abhängigkeit von der Betriebsdrehzahl oder einer diese wiederspiegelnden Größe die Bereitstellung des Druckmediums an die Kupplungseinrichtung (100) zum Halten der Kupplungsanordnung (102, 104) in dem zumindest teilweise eingekuppelten Zustand freizugeben oder zu unterbrechen.

17. Antriebsstrang nach Anspruch 16, **dadurch gekennzeichnet, dass** das Druckmediumsystem dafür ausgelegt ist, die Bereitstellung des Druckmediums an die Kupplungseinrichtung zum Halten der Kupplungsanordnung in dem zumindest teilweise eingekuppelten Zustand dann zu unterbrechen, wenn die momentane Betriebsdrehzahl einen unteren Schwellenwert unterschreitet bzw. die die Betriebsdrehzahl wiederspiegelnde Größe bezogen auf einen Vergleichswert indiziert, dass die momentane Betriebsdrehzahl einen unteren Schwellenwert unterschreitet.

18. Antriebsstrang nach Anspruch 16 oder 17, **dadurch gekennzeichnet, dass** das Druckmediumsystem dafür ausgelegt ist, im zweiten Druckmediumversorgungszustand die zum Betätigungszylinder führende Druckmediumverbindung der Druckmedium-Notversorgung in Abhängigkeit von der Betriebsdrehzahl bzw. der diese wiederspiegelnden Größe zu unterbrechen oder/und freizugeben oder in Abhängigkeit von der Betriebsdrehzahl bzw. der diese wiederspiegelnden Größe zwischen dem ersten und dem zweiten Druckmediumversorgungszustand umzuschalten.

19. Antriebsstrang nach einem der Ansprüche 16 bis 18, **dadurch gekennzeichnet, dass** wenigstens ein Ventil (612) durch einen die Betriebsdrehzahl wiederspiegelnden Druckmediumdruck oder Betriebsmediumdruck oder Betriebsmediumdifferenzdruck umschaltbar ist zwischen einem ersten Ventilzustand, in dem es eine/die Druckmediumverbindung freigibt, und einem zweiten Ventilzustand, in dem es die Druckmediumverbindung unterbricht.

20. Antriebsstrang nach Anspruch 19 rückbezogen zumindest auf Anspruch 18 und sowie Anspruch 12 oder 13, **dadurch gekennzeichnet, dass** die Druckmediumverbindung das elektrisch ansteuerbare Ventil (614) bzw. das durch Druckmedium ansteuerbare Ventil (614") mit dem Umschaltventil (606, 608) verbindet.

21. Antriebsstrang nach Anspruch 19 rückbezogen zumindest auf Anspruch 18, **dadurch gekennzeichnet, dass** die Druckmediumverbindung die zum Betätigungszylinder führende Druckmediumverbindung der Druckmedium-Notversorgung ist.

22. Antriebsstrang nach einem der Ansprüche 19 bis 21 rückbezogen zumindest auf Anspruch 6 sowie gegebenenfalls auf Anspruch 3, **dadurch gekennzeichnet, dass** ein abgabeseitig der Pumpe herrschender Druckmediumdruck oder Betriebsmediumdruck oder ein in einer zur Kupplungseinrichtung führenden Betriebsmediumverbindung vorzugsweise an einer Blende (602) abfallender Betriebsmediumdifferenzdruck als die die Betriebsdrehzahl wiederspiegelnde Größe dem Ventil (612) zuführbar ist.

23. Antriebsstrang nach einem der vorhergehenden Ansprüche, **dadurch gekennzeichnet, dass** die Kupplungsanordnung (102, 104) eine nasslaufende Kupplungsanordnung ist, dass der Betrieb unter Einwirkung des Betriebsmediums ein nasslaufender Betrieb ist und dass das Betriebsmedium eine Betriebsflüssigkeit, ggf. ein Kühlflüssigkeit, ist.

24. Antriebsstrang nach einem der vorhergehenden Ansprüche, **dadurch gekennzeichnet, dass** die Kupplungsanordnung (102, 104) als Lamellen-Kupplungsanordnung ausgebildet ist.

25. Antriebsstrang nach einem der vorhergehenden Ansprüche, **dadurch gekennzeichnet, dass** das Druckmedium ein hydraulisches Druckmedium, insbesondere ein Hydrauliköl ist, das ggf. auch als Betriebsflüssigkeit oder Kühlflüssigkeit dient.

26. Antriebsstrang nach Anspruch 1, **dadurch gekennzeichnet, dass** das Druckmediumsystem wenigstens ein auf einen Differenzdruck zwischen einem auf den ersten Betätigungszylinder wirkenden Druckmediumdruck und einem auf den zweiten Betätigungszylinder wirkenden Druckmediumdruck ansprechendes Ventil (610) aufweist.

27. Antriebsstrang nach Anspruch 26, **dadurch gekennzeichnet, dass** das auf den Differenzdruck ansprechende Ventil (610) in einem ersten Ventilzustand eine erste Druckmediumverbindung der Druckmedium-Notversorgung in Richtung zum ersten Nehmerzylinder (104) freigibt und eine zweite Druckmediumverbindung der Druckmedium-Notversorgung in Richtung zum zweiten Nehmerzylinder (102) unterbricht und in einem zweiten Ventilzustand die erste Druckmediumverbindung unterbricht und die zweite Druckmediumverbindung freigibt.

28. Antriebsstrang nach Anspruch 27 rückbezogen zumindest auf Anspruch 11, **dadurch gekennzeichnet, dass** dem ersten und dem zweiten Betätigungszylinder jeweils ein eigenes Umschaltventil (606 bzw. 608) zugeordnet ist, und dass das auf den Differenzdruck ansprechende Ventil (610) in einem ersten Ventilzustand einer erste Druckmediumverbindung der Druckmedium-Notversorgung in Richtung zum dem ersten Nehmerzylinder (104) zugeordneten Umschaltventil (606) freigibt und eine zweite Druckmediumverbindung der Druckmedium-Notversorgung in Richtung zum dem zweiten Nehmerzylinder (102) zugeordneten Umschaltventil (608) unterbricht und in einem zweiten Ventilzustand die erste Druckmediumverbindung unterbricht und die zweite Druckmediumverbindung freigibt.

29. Antriebsstrang nach Anspruch 28 rückbezogen zumindest auf Anspruch 12 oder 13, **dadurch gekennzeichnet, dass** die erste und zweite Druckmediumverbindung vom elektrisch ansteuerbaren bzw. durch Druckmedium ansteuerbaren Ventil (614 bzw. 614") zum jeweiligen Umschaltventil führt.

30. Einrichtung umfassend ein Druckmediumsystem für ein Kupplungssystem eines Kraftfahrzeug-Antriebsstrangs, und eine zwischen einer Antriebseinheit und einem Getriebe angeordnete Kupplungseinrichtung (100), wobei die Kupplungseinrichtung (100) als Mehrfach-Kupplungseinrichtung, insbesondere Doppel-Kupplungseinrichtung (100), ausgeführt ist und eine erste Kupplungsanordnung (102), der wenigstens ein erster Betätigungszylinder (102) zugeordnet ist, und eine zweite Kupplungsanordnung (104), der wenigstens ein zweiter Betätigungszylinder (104) zugeordnet ist, aufweist, wobei den beiden Zylindern unabhängig voneinander von einer Pumpenanordnung (10) bereitgestelltes Medium als Druckmedium unter Vermittlung wenigstens eines das Druckmedium auf einem Betätigungsdruck bereitstellenden, elektrisch ansteuerbaren Druck-SteueriRegelventils (106,108) des Druckmediumsystems, zuführbar ist, **dadurch gekennzeichnet,**
**dass** das Druckmediumsystem eine Druckmedium-Notversorgung aufweist (600, 614, 606, 608; 600',614", 606, 608) auf deren Grundlage zumindest für einen zumindest einen Notfahrbetrieb des Kraftfahrzeugs ermöglichenden Notbetriebszeitraum unabhängig von einer elektrischen Energieversorgung oder/und unabhängig von ordnungsgemäßer Funktion einer elektronischen Steuer/Regelschaltung Druckmedium für die Betätigung der Kupplungsanordnung (102, 104) oder zumindest zum Halten der Kupplungsanordnung (102, 104) in einem zumindest teilweise eingekuppelten Zustand bereitstellbar ist, wobei das Druckmediumsystem dafür ausgelegt ist, demjenigen Betätigungszylinder von der Druckmedium-Notversorgung (600, 614, 606, 608; 600', 614", 606, 608) bereitgestelltes Druckmedium zuzuführen, der der momentan alleine oder stärker eingekuppelten Kupplungsanordnung zugeordnet ist.

## Claims

1. Motor vehicle drive train, comprising a drive unit (12), a transmission and a clutch system with a pressure medium system and with a clutch device (100) arranged between the drive unit and the transmission, for transmitting torque between the drive unit and the transmission, the clutch device comprising at least one clutch arrangement (102, 104) which may be actuated by conveying pressure medium, the pressure medium being provided for the actuation of the clutch arrangement (102, 104) via the pressure medium system on the basis of a pump arrangement (10) associated with at least the clutch device, by arranging at least one pressure-control/regulating valve (106, 108) of the pressure medium system, providing the pressure medium at an actuating pressure and which may be electrically activated, and the pressure medium system comprising a pressure medium emergency supply unit (600, 614, 606, 608; 600', 614", 606, 608) on the basis of which pressure medium may be provided at least for an emergency operating period, allowing at least one emergency operation of the motor vehicle, independently of an electric power supply or/and independently of the correct functioning of an electronic control/regulating switch, for the actuation of the clutch arrangement (102, 104) or at least for holding the clutch arrangement (102, 104), in an at least partially engaged state, **characterized in that** the clutch device (100) is designed as a multiple clutch device, in particular a double clutch device (100) and comprises a first clutch arrangement (102) to which at least one first actuating cylinder (102) is associated, and a second clutch arrangement (104) to which at least one second actuation cylinder (104) is associated, medium provided by the pump arrangement (10) as pressure medium being able to be supplied to the two cylinders independently of one another and **in that** the pressure medium system for at least one emergency operating period is designed to supply pressure medium provided by the pressure medium emergency supply unit (600, 614, 606, 608; 600', 614", 606, 608) to said actuation cylinder which is associated with the clutch arrangement which, at the time, is exclusively or more heavily engaged.

2. Drive train according to Claim 1, **characterized in that** the clutch device is of the NORMALLY OPEN type, **in that** in the case of a failure of the electric power, the pressure control/regulating valve (106, 108) does not provide sufficient actuating pressure for the actuation of the clutch arrangement or for holding the clutch arrangement in the at least partially engaged state and **in that**, on the basis of the pressure medium emergency supply unit (600, 614, 606, 608; 600', 614", 606, 608), in the event of a failure in the electric power or/and in the case of faulty functioning of the electronic control/regulating switch, pressure medium may be provided at a pressure level which is sufficient for at least partially engaging the clutch arrangement (102, 104) or at least for holding the clutch arrangement (102, 104) in an at least partially engaged state.

3. Drive train according to Claim 1 or 2, **characterized in that** the clutch device is provided for operating under the influence of an operating medium, operating medium for operation under the influence of the operating medium being able to be supplied to the clutch device (100), on the basis of the pump arrangement (10).

4. Drive train according to one of Claims 1 to 3, **characterized in that** the transmission may be actuated by means of an associated actuator system (160p') by conveying pressure medium, the pressure medium preferably being able to be provided for the actuation of the transmission on the basis of the pump arrangement (10), which is also associated with the transmission.

5. Drive train according to one of Claims 1 to 4, **characterized in that** the pressure medium emergency supply unit provides the pressure medium on the basis of pressure medium provided by the pump arrangement (10).

6. Drive train according to Claim 5, **characterized in that** the pump arrangement (10) comprises at least one pump (16) which may be driven by the drive unit (12), on the basis of which the pressure medium may be provided at the one/at the pressure level, and preferably at the actuating pressure, which is sufficient for at least partially engaging the clutch arrangement (102, 104) or for at least partially holding the clutch arrangement (102, 104), in an at least partially engaged state.

7. Drive train according to Claim 5 or 6, **characterized in that** the pressure medium emergency supply unit comprises at least one pressure reducing device, preferably at least one pressure reducing valve (600, 600'), by means of which a pressure level prevailing on an output side of the pump arrangement and/or of the at least one pump (10), in the state driven by the drive unit, may be reduced to a/the pressure level which is sufficient for at least partially engaging the clutch arrangement or for at least partially holding the clutch arrangement in an at least partially engaged state, set to the pressure rating of a pressure medium system portion on the clutch device side or/and of at least one actuating cylinder (104, 106) of the clutch system.

8. Drive train according to one of Claims 1 to 7, **characterized in that** the pressure medium system is designed to respond to a failure in the electric power supply and, as a reaction to a failure in the electric power supply, to switch from a first pressure medium supply state, in which the pressure control/regulating valve (106, 108) provides the pressure medium and/or sets its actuating pressure, to a second pressure medium supply state, in which the pressure medium emergency supply unit (600, 614, 606, 608; 600', 614", 606, 608) provides the pressure medium.

9. Drive train according to Claim 8, **characterized in that** at least one switching valve (606, 608), in a first switching state which corresponds to the first pressure medium supply state, allows a pressure medium connection between the pressure control/regulating valve (108, 106) and a/the actuating cylinder (102, 104) of the clutch device and interrupts a pressure medium connection of the pressure medium emergency supply unit leading to the actuating cylinder and, in a second switching state, which corresponds to the second pressure medium supply state, interrupts the pressure medium connection between the pressure control/regulating valve and the actuating cylinder of the clutch device and allows the pressure medium connection of the pressure medium emergency supply unit leading to the actuation cylinder.

10. Drive train according to Claim 9, **characterized in that** the switching valve is designed as a valve which may be electrically activated and adopts the first switching state, in the state when current is supplied, and adopts the second switching state, in the state when no current is supplied.

11. Drive train according to Claim 9, **characterized in that** the switching valve is designed as a valve (606, 608) which may be activated by pressure medium, and in the pressurized state adopts one switching state, from the first and second switching states, preferably the second switching state and in the non-pressurized state adopts the other switching state, from the first and second switching states, preferably the first switching state.

12. Drive train according to Claim 11, **characterized in that** the pressure medium system comprises at least one valve (614) which may be electrically activated, which, in the state when no current is supplied, allows pressure medium in the direction of the switching valve (606, 608), in order to switch said switching valve from the first to the second switching state and/or to hold said switching valve in the second switching state.

13. Drive train according to Claim 11, **characterized in that** the pressure medium system comprises at least one valve (614") which may be activated by pressure medium, and which in a valve state indicating a failure of the power supply, preferably in a non-pressurized state, allows pressure medium in the direction of the switching valve (606, 608), in order to switch said switching valve from the first to the second switching state and/or to hold said switching valve in the second switching state.

14. Drive train according to Claim 13, **characterized in that** the valve (614") which may be activated by pressure medium, on at least one control inlet, receives at least one pilot pressure as control pressure, which serves for the pilot control of at least one further valve (22n", 614", 106", 108").

15. Drive train according to Claim 14, **characterized in that** a selector valve arrangement (630", 632" supplies the highest of a plurality of different pilot pressures to the control inlet.

16. Drive train according to one of Claims 8 to 15, **characterized in that** the pressure medium system is designed to respond directly or indirectly to a current operating speed of the drive unit (12), preferably designed as an internal combustion engine, and depending on the operating speed or a value mirroring said operating speed, to allow or to interrupt the provision of the pressure medium to the clutch device (100), for holding the clutch arrangement (102, 104) in the at least partially engaged state.

17. Drive train according to Claim 16, **characterized in that** the pressure medium system is designed to interrupt the provision of the pressure medium to the clutch device for holding the clutch arrangement in the at least partially engaged state, when the current operating speed exceeds a lower threshold and/or the value mirroring the operating speed, relative to a comparative value, indicates that the current operating speed exceeds a lower threshold.

18. Drive train according to Claim 16 or 17, **characterized in that** the pressure medium system is designed, in the second pressure medium supply state, to interrupt or/and to allow the pressure medium connection of the pressure medium emergency supply unit leading to the actuating cylinder, depending on the operating speed and/or the value mirroring said operating speed, or to switch between the first and the second pressure medium supply state, depending on the operating speed and/or the value mirroring said operation speed.

19. Drive train according to one of Claims 16 to 18, **characterized in that** at least one valve (612) may be switched by a pressure medium pressure or operating medium pressure or operating medium differential pressure mirroring the operating speed, between a first valve state in which it allows a/the pressure medium connection and a second valve state in which it interrupts the pressure medium connection.

20. Drive train according to Claim 19, referring back at least to Claim 18 and also Claim 12 or 13, **characterized in that** the pressure medium connection connects the valve (614) which may be electrically activated and/or the valve (614") which may be activated by pressure medium to the switching valve (606, 608).

21. Drive train according to Claim 19, referring back at least to Claim 18, **characterized in that** the pressure medium connection is the pressure medium connection of the pressure medium emergency supply unit leading to the actuating cylinder.

22. Drive train according to one of Claims 19 to 21, referring back at least to Claim 6, and optionally to Claim 3, **characterized in that** a pressure medium pressure or an operating medium pressure prevailing on the output side of the pump or an operating medium differential pressure decreasing in an operating medium connection leading to the clutch device, preferably at an orifice (602), may be supplied to the valve (612) as the value mirroring the operating speed.

23. Drive train according to one of the preceding claims, **characterized in that** the clutch arrangement (102, 104) is a wet running clutch arrangement, **in that** the operation is a wet running operation under the influence of the operating medium, and **in that** the operating medium is an operating fluid, possibly a cooling fluid.

24. Drive train according to one of the preceding claims, **characterized in that** the clutch arrangement (102, 104) is configured as a plate clutch arrangement.

25. Drive train according to one of the preceding claims, **characterized in that** the pressure medium is a hydraulic pressure medium, in particular a hydraulic oil, which possibly also serves as operating fluid or cooling fluid.

26. Drive train according to Claim 1, **characterized in that** the pressure medium system comprises at least one valve (610) responding to a differential pressure between a pressure medium pressure acting on the first actuating cylinder and a pressure medium pressure acting on the second actuating cylinder.

27. Drive train according to Claim 26, **characterized in that** the valve (610) responding to the differential pressure, in a first valve state, allows a first pressure medium connection of the pressure medium emergency supply unit in the direction of the first slave cylinder (104) and interrupts a second pressure medium connection of the pressure medium emergency supply unit in the direction of the second slave cylinder (102) and, in a second valve state, interrupts the first pressure medium connection and allows the second pressure medium connection.

28. Drive train according to Claim 27, referring back at least to Claim 11, **characterized in that** one respective individual switching valve (606 and/or 608) is associated with the first and the second actuating cylinder, and **in that** the valve (610) responding to the differential pressure, in a first valve state, allows a first pressure medium connection of the pressure medium emergency supply unit in the direction of the switching valve (606) associated with the first slave cylinder (104) and interrupts a second pressure medium connection of the pressure medium emergency supply unit in the direction of the switching valve (608) associated with the second slave cylinder (102) and, in a second valve state, interrupts the first pressure medium connection and allows the second pressure medium connection.

29. Drive train according to Claim 28, referring at least to Claim 12 or 13, **characterized in that** the first and second pressure medium connection leads from the valve (614 and/or 614"), which may be electrically activated and/or which may be activated by pressure medium, to the respective switching valve.

30. Device comprising a pressure medium system for a clutch system of a motor vehicle drive train and a clutch device (100) arranged between a drive unit and a transmission, the clutch device (100) being designed as a multiple clutch device, in particular a double clutch device (100), and comprising a first clutch arrangement (102), to which at least one first actuating cylinder (102) is associated and a second clutch arrangement (104), to which at least one second actuating cylinder (104) is associated, medium provided by a pump arrangement (10) as pressure medium being able to be supplied to the two cylinders independently of one another, by arranging at least one pressure control/regulating valve (106, 108) of the pressure medium system and which may be electrically activated and providing the pressure medium at an actuating pressure, **characterized in that** the pressure medium system comprises a pressure medium emergency supply unit (600, 614, 606, 608; 600', 614", 606, 608), on the basis of which pressure medium may be provided at least for an emergency operating period, allowing at least one emergency operation of the motor vehicle, independently of an electric power supply or/and independently of the correct functioning of an electronic control/regulating switch, for the actuation of the clutch arrangement (102, 104) or at least for holding the clutch arrangement (102, 104) in an at least partially engaged state, the pressure medium system being designed to supply pressure medium provided to the actuating cylinder of the pressure medium emergency supply unit (600, 614, 606, 608; 600', 614", 606, 608) which is associated with the clutch arrangement which, at the time, is exclusively or more heavily engaged.

## Revendications

1. Chaîne cinématique d'un véhicule automobile, comprenant une unité d'entraînement (12), une boîte de vitesses et un système d'embrayage, avec un système de fluide sous pression et avec un dispositif d'embrayage (100) disposé entre l'unité d'entraînement et la boîte de vitesses, pour la transmission du couple entre l'unité d'entraînement et la boîte de vitesses, le dispositif d'embrayage comportant un agencement d'embrayage (102, 104) pouvant être actionné par l'intermédiaire d'un fluide sous pression, par l'intermédiaire du système de fluide sous pression sur la base d'un agencement de pompes (10) au moins associé au dispositif d'embrayage, le fluide sous pression pouvant être mis à disposition pour l'actionnement de l'agencement d'embrayage (102, 104) par l'intermédiaire d'au moins une soupape de commande/de réglage (106, 108) à excitation électrique du système de fluide sous pression, amenant le fluide sous pression à une pression d'actionnement et le système de fluide sous pression comportant un alimentation d'urgence de fluide sous pression (600, 614, 606, 608 ; 600', 614", 606, 608) sur la base de laquelle au moins pour une période de fonctionnement d'urgence permettant un mode de service d'urgence du véhicule automobile, indépendamment d'une alimentation en énergie électrique et/ou indépendamment d'une fonction selon les règles de l'art d'un circuit électronique de commande/de réglage, du fluide sous pression peut être mis à disposition pour l'actionnement de l'agencement d'embrayage (102, 104) ou au moins pour le maintien de l'agencement d'embrayage (102, 104) à l'état embrayé **caractérisée en ce que** le dispositif d'embrayage (100) est réalisé en tant que dispositif d'embrayage multiple, notamment en tant que dispositif de double embrayage (100) et comporte un premier agencement d'embrayage (102) auquel est associé au moins un premier cylindre d'actionnement (102) et un deuxième agencement d'embrayage (104), auquel est associé au moins un deuxième cylindre d'actionnement(104) de fluide mis à disposition par l'agencement de pompe (10) pouvant être alimenté vers les deux cylindres, indépendamment l'une de l'autre en tant que fluide sous pression, et **en ce que** le système de fluide sous pression est conçu pour au moins une période de fonctionnement d'urgence pour alimenter de fluide sous pression mis à disposition par l'alimentation d'urgence de fluide sous pression (600, 614, 606, 608 ; 600' 614", 606, 608) le cylindre d'actionnement auquel est associé l'agencement d'embrayage qui est embrayé seul ou plus fort.

2. Chaîne cinématique selon la revendication 1, **caractérisée en ce que** le dispositif d'embrayage est de type NORMALEMENT OUVERT, **en ce que** dans le cas d'une panne d'énergie électrique, la soupape de commande/de réglage de pression (106, 108) ne met à disposition aucune pression d'actionnement pour l'actionnement de l'agencement d'embrayage ou pour le maintien de l'agencement d'embrayage dans la position au moins partiellement débrayée et **en ce que** sur la base de l'alimentation d'urgence de fluide sous pression (600, 614, 606, 608 ; 600', 614", 606, 608), dans le cas d'une panne de l'énergie électrique et/ou dans le cas d'un dysfonctionnement du circuit de commande/de réglage, du fluide sous pression peut être mis à disposition à un niveau de pression suffisant pour embrayer au moins partiellement l'agencement d'embrayage (102, 104) ou au moins pour maintenir l'agencement d'embrayage (102, 104) dans une position au moins partiellement embrayée.

3. Chaîne cinématique selon la revendication 1 ou 2, **caractérisée en ce que** le dispositif d'embrayage est prévu pour un fonctionnement sous l'effet d'un fluide de service, sur la base de l'agencement de pompes (10), du fluide de service pouvant être alimenté vers le dispositif d'embrayage (100) pour le fonctionnement sous l'effet du fluide sous pression.

4. Chaîne cinématique selon l'une quelconque des revendications 1 à 3, **caractérisée en ce que** la boîte de vitesses est actionnable au moyen d'un système d'actionneurs (160p'), par l'intermédiaire de fluide sous pression, le fluide sous pression pour l'actionnement de la boîte de vitesses pouvant être mis à disposition de préférence sur la base de l'agencement de pompes (10) associé également à la boîte de vitesses.

5. Chaîne cinématique selon l'une quelconque des revendications 1 à 4, **caractérisée en ce que** l'alimentation d'urgence de fluide sous pression met à disposition le fluide sous pression sur la base du fluide sous pression mis à disposition par l'agencement de pompes (10).

6. Chaîne cinématique selon la revendication 5, **caractérisée en ce que** l'agencement de pompes (10) comporte au moins une pompe (16) pouvant être entraînée par l'unité d'entraînement (12), sur la base de laquelle le fluide sous pression peut être mis à disposition à l'un des/au niveau(x) de pression suffisant(s) pour l'embrayage au moins partiel de l'agencement d'embrayage (102, 104) ou au moins pour maintenir l'agencement d'embrayage (102, 104) dans une position au moins partiellement embrayée, ainsi que de préférence à la pression d'actionnement.

7. Chaîne cinématique selon la revendication 5 ou 6, **caractérisée en ce que** l'alimentation d'urgence de fluide sous pression comporte un dispositif réducteur de pression, de préférence au moins un limiteur de pression (600, 600') permettant de réduire un niveau de pression régnant sur un côté sortie de l'agencement de pompes ou de la au moins une pompe (10) dans la position entraînée par l'unité d'entraînement à un/le niveau de pression suffisant pour l'embrayage au moins partiel de l'agencement d'embrayage ou au moins pour maintenir l'agencement d'embrayage dans une position au moins partiellement embrayée, adapté au dimensionnement de la pression d'un tronçon de système de fluide sous pression côté dispositif d'embrayage et/ou d'au moins un cylindre d'actionnement (104, 106) du système d'embrayage.

8. Chaîne cinématique selon l'une quelconque des revendications 1 à 7, **caractérisée en ce que** le système de fluide sous pression est conçu pour réagir à une panne de l'alimentation en énergie électrique et pour commuter, en réaction à une panne de l'alimentation électrique d'une première position d'alimentation de fluide sous pression, dans laquelle la soupape de commande/de réglage de pression (106, 108) met à disposition le fluide sous pression ou règle la pression d'actionnement de ce dernier dans une deuxième position d'alimentation de fluide sous pression, dans laquelle l'alimentation d'urgence de fluide sous pression (600, 614, 606, 608; 600', 614", 606, 608) met à disposition le fluide sous pression.

9. Chaîne cinématique selon la revendication 8, **caractérisée en ce que** dans une première position de commutation, qui correspond à la première position d'alimentation de fluide sous pression, une soupape d'inversion (606, 608) libère une liaison par fluide sous pression entre la soupape de commande/de réglage de pression (108, 106) et un/le cylindre d'actionnement (102, 104) du dispositif d'embrayage et interrompt une liaison par fluide sous pression menant vers le cylindre d'actionnement de l'alimentation d'urgence de fluide sous pression et dans une deuxième position de commutation, qui correspond à la deuxième position d'alimentation de fluide sous pression, libère la liaison par fluide sous pression entre la soupape de commande/de réglage de la pression et le cylindre d'actionnement du dispositif d'embrayage et libère la liaison par fluide sous pression menant vers le cylindre d'actionnement de l'alimentation d'urgence de fluide sous pression.

10. Chaîne cinématique selon la revendication 9, **caractérisée en ce que** la soupape d'inversion est conçue en tant que soupape à excitation électrique et adopte le premier état de commutation lorsqu'elle est alimentée en courant et le deuxième état de commutation lorsqu'elle n'est pas alimentée en courant.

11. Chaîne cinématique selon la revendication 9, **caractérisée en ce que** la soupape d'inversion est conçue en tant qu'une soupape à excitation par fluide sous pression (606, 608) et adopte lorsqu'elle est sous pression l'un, parmi le premier et le deuxième état de commutation, de préférence le deuxième état de commutation et lorsqu'elle n'est pas sous pression adopte l'autre, parmi le premier et le deuxième état de commutation, de préférence le premier état de commutation.

12. Chaîne cinématique selon la revendication 11, **caractérisée en ce que** le système de fluide sous pression comporte au moins une soupape à actionnement électrique (614), qui lorsqu'elle n'est pas alimentée en courant libère du fluide sous pression en direction de la soupape d'inversion (606, 608), pour commuter cette dernière de la première dans la deuxième position de commutation ou par la maintenir dans la deuxième position de commutation.

13. Chaîne cinématique selon la revendication 11, **caractérisée en ce que** le système de fluide sous pression comporte au moins une soupape (614") à excitation par fluide sous pression, qui dans une position de la soupape indiquant une panne de l'alimentation en énergie, de préférence dans une position exempte de pression libère du fluide sous pression en direction de la soupape d'inversion (606, 608), pour commuter cette dernière de la première dans la deuxième position de commutation ou par la maintenir dans la deuxième position de commutation.

14. Chaîne cinématique selon la revendication 13, **caractérisée en ce que** la soupape à excitation par fluide sous pression (614") réceptionne sur au moins une entrée de commande en tant que pression de commande une pression de commande pilote, servant à piloter au moins un autre soupape (22n", 614", 106", 108").

15. Chaîne cinématique selon la revendication 14, **caractérisée en ce qu'**un agencement de soupapes de sélection (630", 632") alimente vers l'entrée de commande la pression pilote supérieure parmi plusieurs pressions pilotes différentes.

16. Chaîne cinématique selon l'une quelconque des revendications 8 à 15, **caractérisée en ce que** le système de fluide sous pression est conçu pour réagir directement ou indirectement à un régime de l'unité d'entraînement (12) conçue de préférence en tant que moteur à combustion interne, et en fonction du régime ou d'une dimension reflétant ce dernier, pour libérer ou pour interrompre la mise à disposition du fluide sous pression au dispositif d'embrayage (100), pour le maintien de l'agencement d'embrayage (102, 104) dans la position au moins partiellement embrayée.

17. Chaîne cinématique selon la revendication 16, **caractérisée en ce que** le système de fluide sous pression est conçu pour interrompre la mise à disposition du fluide sous pression au dispositif d'embrayage, pour le maintien de l'agencement d'embrayage dans la position au moins partiellement embrayée lorsque que le régime momentané n'atteint pas une valeur seuil inférieure ou si la dimension reflétant le régime indique par rapport à une valeur comparative que le régime momentané n'atteint pas une valeur seuil inférieure.

18. Chaîne cinématique selon la revendication 16 ou 17, **caractérisée en ce que** le système de fluide sous pression est conçu pour interrompre et/ou libérer dans la deuxième position d'alimentation de fluide sous pression la liaison par fluide sous pression menant vers le cylindre d'actionnement de l'alimentation d'urgence de fluide sous pression, en fonction du régime ou de la dimension reflétant ce dernier, ou pour commuter, en fonction du régime ou de la dimension reflétant ce dernier entre la première et la deuxième position d'alimentation de fluide sous pression.

19. Chaîne cinématique selon l'une quelconque des revendications 16 à 18, **caractérisée en ce que** au moins une soupape (612) est commutable par une pression de fluide sous pression ou par une pression de fluide de service ou par une pression différentielle de fluide sous pression reflétant le régime entre une première position de soupape, dans laquelle elle libère une/la liaison par fluide sous pression et une deuxième position de soupape, dans laquelle elle interrompt la liaison par fluide sous pression.

20. Chaîne cinématique selon la revendication 19 en référence à au moins la revendication 18 ainsi qu'à la revendication 12 ou 13, **caractérisée en ce que** la liaison par fluide sous pression relie la soupape à excitation électrique (614) ou la soupape à excitation par pression (614") avec la soupape d'inversion (606, 608).

21. Chaîne cinématique selon la revendication 19, en référence à au moins la revendication 18, **caractérisée en ce que** la liaison par fluide sous pression est la liaison par fluide sous pression menant vers le cylindre d'actionnement de l'alimentation d'urgence de fluide sous pression.

22. Chaîne cinématique selon l'une quelconque des revendications 19 à 21, en référence à au moins la revendication 6, ainsi que le cas échéant à la revendication 3, **caractérisée en ce qu'**une pression de fluide sous pression ou une pression de fluide de service (602) régnant côté gaz d'échappement de la pompe ou une pression différentielle décroissante de préférence sur un obturateur, dans une liaison de fluide de service menant vers le dispositif d'embrayage peut être alimentée vers la soupape (612), en tant que dimension reflétant le régime.

23. Chaîne cinématique selon l'une quelconque des revendications précédentes, **caractérisée en ce que** l'agencement d'embrayage (102, 104) est un agencement d'embrayage à fonctionnement humide, **en ce que** le fonctionnement sous l'effet du fluide de service est un fonctionnement humide et **en ce que** le fluide de service est un liquide de service, le cas échéant un liquide de refroidissement.

24. Chaîne cinématique selon l'une quelconque des revendications précédentes, **caractérisée en ce que** l'agencement d'embrayage (102, 104) est conçu sous la forme d'un agencement d'embrayage à lamelles.

25. Chaîne cinématique selon l'une quelconque des revendications précédentes, **caractérisée en ce que** le fluide sous pression est un fluide hydraulique sous pression, notamment une huile hydraulique, qui le cas échéant sert aussi de liquide de service ou de liquide de refroidissement.

26. Chaîne cinématique selon la revendication 1, **caractérisée en ce que** le système de fluide sous pression comporte une soupape (610) réagissant à une pression différentielle entre une pression de fluide sous pression agissant sur le premier cylindre d'actionnement et une pression de fluide sous pression agissant sur le deuxième cylindre d'actionnement.

27. Chaîne cinématique selon la revendication 26, **caractérisée en ce que** dans une première position de la soupape, la soupape (610) réagissant à la pression différentielle libère une première liaison par fluide sous pression de l'alimentation d'urgence de fluide sous pression en direction du premier cylindre récepteur (104) et interrompt une deuxième liaison par fluide sous pression de l'alimentation d'urgence de fluide sous pression en direction du deuxième cylindre récepteur (102) et dans une deuxième position de la soupape, interrompt la première liaison par fluide sous pression et libère la deuxième liaison par fluide sous pression.

28. Chaîne cinématique selon la revendication 27 en référence à au moins la revendication 11, **caractérisée en ce que** chaque fois une propre soupape d'inversion (606 ou 608) est associée au premier cylindre d'actionnement et au deuxième cylindre d'actionnement et **en ce que** dans une première position de la soupape, la soupape (610) réagissant à la première pression différentielle libère une première liaison par fluide sous pression de l'alimentation d'urgence de fluide sous pression en direction de la soupape d'inversion (606) associée au premier cylindre récepteur (104) et interrompt une deuxième liaison par fluide sous pression de l'alimentation d'urgence de fluide sous pression, en direction de la soupape d'inversion (608) associée au deuxième cylindre récepteur (102) et dans une deuxième position de la soupape interrompt la première liaison par fluide sous pression et libère la deuxième liaison par fluide sous pression.

29. Chaîne cinématique selon la revendication 28, en référence à au moins la revendication 12 ou 13, **caractérisée en ce que** la première et la deuxième liaison par fluide sous pression mène de la soupape à excitation électrique ou à excitation par fluide sous pression (614 ou 614") vers la soupape d'inversion concernée.

30. Installation comprenant un système de fluide sous pression pour un système d'embrayage d'une chaîne cinématique d'un véhicule automobile et un dispositif d'embrayage (100) disposé entre une unité d'entraînement et une boîte de vitesses, le dispositif d'embrayage (100) étant conçu en tant que dispositif d'embrayage multiple, notamment de dispositif de double embrayage (100), et comportant un agencement d'embrayage (102), auquel est associé au moins un premier cylindre d'actionnement (102) et un deuxième agencement d'embrayage (104), auquel est associé au moins un deuxième cylindre d'actionnement (104), du fluide mis à disposition par un agencement de pompes (10) pouvant être alimenté en tant que fluide sous pression vers les deux cylindres, indépendamment l'un de l'autre, par l'intermédiaire d'au moins une soupape de commande/de réglage de la pression (106, 108) à excitation électrique du système de fluide sous pression amenant le fluide sous pression à une pression d'actionnement, **caractérisée en ce que** le système de fluide sous pression comporte une alimentation d'urgence de fluide sous pression (600, 614, 606, 608 ; 600',614" 606, 608) sur la base de laquelle au moins pour une période de service d'urgence permettant au moins un fonctionnement d'urgence du véhicule automobile, indépendamment d'une alimentation d'énergie électrique et/ou indépendamment d'un fonctionnement selon les règles de l'art d'un circuit électronique de commande/de réglage, du fluide sous pression peut être mis à disposition pour l'actionnement de l'agencement d'embrayage (102, 104) ou au moins pour maintenir l'agencement d'embrayage (102, 104) dans une position au moins partiellement embrayée, le système de fluide sous pression étant conçu pour alimenter du fluide sous pression mis à disposition par l'alimentation d'urgence de fluide sous pression (600, 614, 606, 608 ; 600', 614", 606, 608) vers le cylindre d'actionnement auquel est associé l'agencement d'embrayage qui est embrayé seul ou plus fort.
